# EUROPÄISCHE PATENTANMELDUNG

(11) **EP 3 988 838 A1**
(43) Veröffentlichungstag der Anmeldung: **27.04.2022**
(21) Anmeldenummer: 21201461.7
(22) Anmeldetag: 07.10.2021
(51) Int. Cl.: F21V 5/04, F21V 7/00, F21V 7/06, F21V 13/04, F21Y 115/10

(54) **GEBÄUDELEUCHTE**

(30) Priorität: 19.10.2020 DE 102020127476
(71) Anmelder: ERCO GmbH, 58507 Lüdenscheid (DE)
(72) Erfinder: Bremerich, Matthias, 57368 Lennestadt (DE)
(74) Vertreter: Roche, von Westernhagen & Ehresmann

(57) **Zusammenfassung**

Die Erfindung betrifft unter anderem eine Leuchte (10, 12, 13) zur Ausleuchtung von Gebäudeflächen (14) oder Gebäudeteilflächen, umfassend eine Lichtquelle (18) mit wenigstens einer LED (19a, 19b, 19c), eine Kollimatoroptik (20), und einen Reflektor (21), wobei ein von der Lichtquelle emittierter radial innerer Lichtanteil (22) auf die Kollimatoroptik trifft, und von dieser gebündelt wird, und wobei ein von der Lichtquelle emittierter radial äußerer Lichtanteil (23) die Kollimatoroptik passiert und auf den Reflektor (21) trifft, und von diesem gebündelt wird.

## Beschreibung

Die Erfindung betrifft eine Leuchte nach Anspruch 1.

Die Anmelderin entwickelt und fertigt Leuchten seit Jahrzehnten. Die bekannten Leuchten dienen zur Ausleuchtung einer Gebäudefläche oder einer Gebäudeteilfläche, beispielsweise einer Wandfläche, einer Bodenfläche eines Gebäudes oder einer einem Gebäude zugeordneten Außenfläche, z. B. einer Wegfläche. Als Gebäudeteilfläche werden beispielsweise auch Kunstwerke, wie Gemälde oder Statuen, verstanden, die ebenfalls in einem Gebäude angeordnet sind, oder einem solchen Gebäude zugeordnet sind.

Mit dem grundlegenden Wandel der in derartigen Leuchten verwendeten Leuchtmittel hin zum Betrieb von LEDs und insbesondere auch mit dem Wandel der Leuchtmittel einhergehenden Änderung der Versorgungsspannung von herkömmlich 120/230 Volt Wechselstrom auf Versorgungsspannungen zwischen 20 und 50 Volt, geht eine Änderung der Bauweise und Konstruktion von Leuchten einher.

Aus der DE 10 2008 063 369 A1 geht eine Leuchte hervor, bei der eine Linsenplatte mit einer Vielzahl von Mikrostrukturen austauschbar angeordnet ist. Durch Austausch der Linsenplatte-kann die Lichtverteilung der Leuchte geändert werden.

Ausgehend von der in der eingangs beschriebenen Patentanmeldung offenbarten Leuchte besteht grundsätzlich der Wunsch, eine Leuchte bereitzustellen, die modular aufgebaut werden kann, die mit einfachen Mitteln eine Änderung der Lichtverteilung der Leuchte zulässt, und die bei sehr hoher Effizienz eine qualitativ hochwertige Lichtverteilung generiert.

Eine entsprechende Leuchte, die diese Anforderungen erfüllt, ist in der nachveröffentlichten deutschen Patentanmeldung DE 10 2019 119 682 A1 der Anmelderin beschrieben.

Hier ist vorgesehen, die Leuchte mit einem singulären Linsenelement auszustatten. Die vorbeschriebene Leuchte weist einen Lichtantrieb auf, der ein paralleles Lichtstrahlenbündel bereitstellt. Hierzu ist eine Kollimatoroptik vorgesehen.

Insbesondere bei mittleren und großen bis sehr großen Baugrößen bereitet die Fertigung entsprechender groß skalierter Kollimatoroptiken fertigungstechnische Probleme.

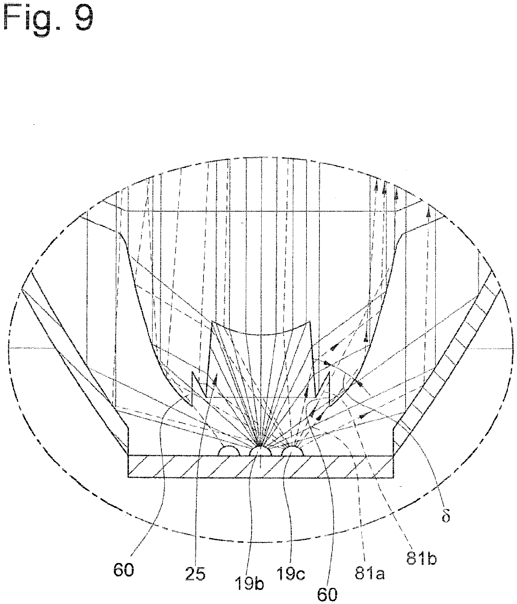

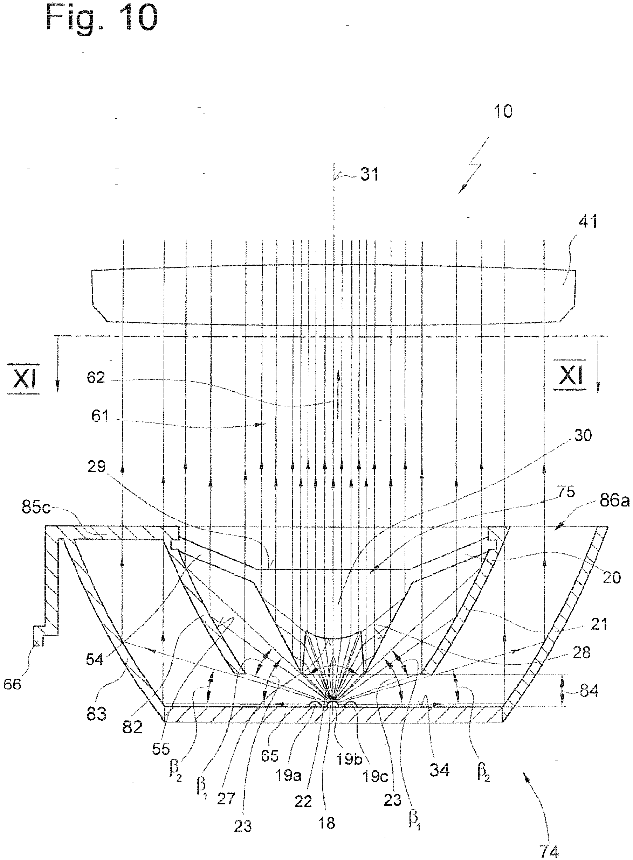

Vor diesem Hintergrund schlägt die in Bezug genommene nachveröffentlichte Patentanmeldung mit ihren Ausführungsbeispielen gemäß den Figuren 9 und 10 Kollimatoroptiken vor, die nach Art einer Fresnellinse ausgebildet sind und eine geringe Bauhöhe aufweisen, um damit eine erleichterte Fertigung zu ermöglichen.

Allerdings können sich nur unter bestimmten Voraussetzungen, auch in Abhängigkeit von den verwendeten Lichtquellen, zum Teil auch bedingt durch Resonanzeffekte und Mehrfachreflektionen, ungewünschte Effekte in der Lichtverteilung ergeben. Auch ist die Fertigung dieser Kollimatoroptiken mit besonderen Herausforderungen verbunden.

Hiervon ausgehend liegt die Aufgabe der vorliegenden Erfindung darin, eine Leuchte bereitzustellen, die einen Lichtantrieb verwendet, der universell für unterschiedliche Lichtquellen einsetzbar und der insbesondere auf einfache Weise in seiner Größe skalierbar ist, und der insbesondere auch bei sehr hohen Baugrößen zu fertigender Leuchten eine einfache Herstellung zulässt.

Die Erfindung löst diese Aufgabe mit den Merkmalen des Anspruches 1.

Das Prinzip der Erfindung besteht im wesentlichen darin, anstelle einer im Stand der Technik bekannten Kollimatoroptik zur Bündelung der Lichtstrahlen zusätzlich einen Reflektor vorzusehen.

Die Besonderheit besteht darin, dass die Kollimatoroptik auf der optischen Achse der Lichtquelle angeordnet ist, und das von der Lichtquelle emittierte radiale Lichtstrahlenbündel kollimiert oder bündelt, insbesondere zu einem parallelen Lichtstrahlenbündel oder einem im wesentlichen parelleles Lichtstrahlenbündel. Die Kollimatoroptik ist dabei so angeordnet, dass ein radial äußerer, von der Lichtquelle emittierter Lichtanteil an der Kollimatoroptik vorbeistrahlt, diese also passiert. Dieser passierende Lichteinfall trifft auf einen Reflektor und wird von diesem gebündelt.

Das von dem Reflektor reflektierte Lichtstrahlenbündel tritt ebenfalls als paralleles Lichtstrahlenbündel aus dem Lichtantrieb heraus aus. Vorzugsweise ist die Lichtquelle im Bereich des Brennpunktes des parabolförmigen Reflektors angeordnet.

Es wird also erfindungsgemäß eine Leuchte mit einem kollimierenden Lichtantrieb bereitgestellt, der auf besondere Weise das von der Lichtquelle emittierte Licht bündelt: Eine Bündelung wird sowohl durch die zentral, nahe der optischen Achse angeordnete Kollimatoroptik als auch durch einen radial außen angeordneten Reflektor erreicht. Dabei übernimmt jedes dieser beiden kollimierenden Elemente eine eigene Aufgabe.

Die Formulierung, wonach ein radial äußerer, von der Lichtquelle emittierte Lichtanteil die Kollimatoroptik passiert, umfasst Ausführungsformen, bei denen dieser radial äußere Lichtanteil ebenfalls die Totalreflektionsflächen an der Kollimatoroptik und/oder die lichtbrechenden optischen Grenzflächen an der Kollimatoroptik passiert.

Die Formulierung schließt aber nicht aus, dass an der Kollimatoroptik zusätzlich auch noch Werkstoffbereiche angeordnet sind, die beispielsweise von den Lichtanteilen, die von der Lichtquelle zu dem Reflektor gelangen, auch noch durchdrungen werden.

Insbesondere umfasst diese Formulierung aber alle Varianten, bei denen die Kollimatoroptik eine Lichteintrittsfläche aufweist, durch die hindurch die radial innen von der Lichtquelle emittierten Lichtanteile hindurch in die Kollimatoroptik eintreten, und dabei entweder auf Totalreflektionsflächen geleitet werden, oder/und auf lichtbrechende Grenzflächen treffen, wobei die radial außen von der Lichtquelle emittierten Lichtanteile an dieser Lichteintrittsfläche der Kollimatoroptik vorbei geworfen werden, und direkt auf den Reflektor treffen.

Die Kollimatoroptik umfasst vorzugsweise eine Höhlung mit Seitenflächen und einem Deckenabschnitt. Der Deckenabschnitt ist zentral, auf der optischen Achse, angeordnet, und stellt einen Linsenabschnitt bereit. Die Seitenflächen der Höhlung dienen dem Eintritt von Lichtstrahlenanteilen, die auf eine Totalreflektionsfläche der Kollimatoroptik gelenkt werden, und von dort zur Lichtaustrittsfläche der Kollimatoroptik gelangen.

Die Kollimatoroptik ist beabstandet von der Lichtquelle angeordnet.

Während im Stand der Technik eine Höhlung einer Kollimatoroptik dazu diente, die LEDs aufzunehmen, so dass diese Höhlung die LEDs übergreifen konnte, wird erfindungsgemäß die Kollimatoroptik mit Bedacht beabstandet von der Lichtquelle angeordnet, um einen Raum zur Verfügung zu stellen, der ein Passieren von radial äußeren Lichtanteilen ermöglicht.

Die Kollimatoroptik ist relativ zu dem Reflektor exakt positioniert. Vorteilhafterweise sind Kollimatoroptik und Reflektor aneinander befestigt. Eine Befestigung des Reflektors relativ zu der Kollimatoroptik kann unmittelbar oder mittelbar erfolgen. Von der Erfindung ist auch umfasst, wenn Kollimatoroptik und Reflektor unter Zuhilfenahme eines Montagelementes, z. B. unter Zuhilfenahme eines Klemmrings, aneinander befestigt sind.

Weiter vorteilhaft bilden Kollimatoroptik und Reflektor miteinander eine Handhabungseinheit, die gemeinsam an einem Gehäuse der Leuchte und/oder relativ zu einem Gehäuse der Leuchte montiert und/oder befestigt und/oder positioniert werden kann.

Die erfindungsgemäße Leuchte umfasst eine Lichtquelle, die eine oder mehrere LEDs umfasst. Insbesondere kommen High Power LEDs oder COB (Chip On Board) LEDs in Betracht. Die LEDs können sämtlich dieselbe oder unterschiedliche Lichtfarben aufweisen oder auch farbänderbar ausgebildet sein.

Von der Erfindung sind auch Leuchten umfasst, die als Lichtquelle eine Lichtmischeinheit vorsehen.

Eine solche Lichtmischeinheit kann beispielsweise eine oder mehrere LEDs oder mehrere LED-Pixel aufweisen, wobei die unterschiedlichen LEDs oder die unterschiedlichen LED-Pixel Licht gleicher oder unterschiedlicher Farben emittieren können. So kann eine Lichtmischeinheit beispielsweise eine RGBW-LED-Lichtquelle mit einer roten, einer grünen, einer blauen und einer weißen LED umfassen, oder mehrere LEDs, die Licht mit unterschiedlichen Weißlichttönen emittieren (Tunable White). Die Lichtmischeinheit kann das von unterschiedlichen Lichtquellen emittierte Licht mischen. Hierzu kann die Lichtmischeinheit beispielsweise auch einen Reflektor aufweisen. Hier stellt also eine komplex aufgebaute Lichtquelle ein farblich und/oder homogen gemischtes, insbesondere vor-gemischtes Licht bereit.

Die erfindungsgemäße Leuchte dient zur Ausleuchtung von Gebäudeflächen oder Gebäudeteilflächen. Hierzu können insbesondere Bodenflächen, Wandflächen oder Deckenflächen eines Gebäudes gehören, wie auch Kunstwerke wie Statuen oder Gemälde, sowie auch Gehflächen, Verkehrsflächen, insbesondere im Innen- und Außenbereich von Gebäuden.

Die Leuchte kann beispielsweise an der Decke oder an einer Bodenwand oder an einer Seitenwand des Gebäudes montiert sein oder als Mastleuchte oder Pollerleuchte ausgebildet sein. Besonders vorteilhaft ist ein Ausführungsbeispiel der Erfindung, bei dem die Leuchte als ein Strahler, der insbesondere an einer Stromschiene montierbar ist, ausgebildet.

Eine Kollimatoroptik im Sinne der vorliegenden Patentanmeldung ist ein Licht bündelndes Element, welches aus einem transparenten Material, z. B. aus PMMA oder Glas oder Silikon besteht. Die Kollimatoroptik ist insbesondere auf der optischen Achse der Lichtquelle angeordnet. Die Kollimatoroptik ist dazu ausgebildet, einen von der Lichtquelle emittierten radial inneren Lichtanteil zu bündeln. Insbesondere kann die Kollimatoroptik ein Lichtstrahlenbündel von der Lichtaustrittsfläche der Kollimatoroptik emittieren, das parallel ausgebildet ist oder im wesentlichen parallel ausgebildet ist.

Die Kollimatoroptik kann insbesondere eine Höhlung aufweisen. Die Höhlung der Kollimatoroptik stellt weiter insbesondere die Lichteintrittsfläche der Kollimatoroptik bereit. Die Höhlung kann eine Deckenfläche und Seitenwandabschnitte aufweisen.

Die Höhlung kann vorteilhaft in einer Richtung quer zu einer optischen Achse der Kollimatoroptik eine Abmessung aufweisen, die eine Abmessung der Lichtquelle übersteigt. Auf diese Weise wird sichergestellt, dass die Kollimatoroptik einer bestimmten Größe für unterschiedliche Arten von Lichtquellen, insbesondere für Lichtquellen mit unterschiedlichen Anzahlen von LEDs oder mit unterschiedlichen Abmessungen, einsetzbar ist.

Gemäß einer vorteilhaften Ausgestaltung der Erfindung ist die Kollimatoroptik von der Lichtquelle beabstandet angeordnet. Der Abstand wird auch als Passierabstand bezeichnet. Durch diesen Begriff wird angedeutet, dass die Beabstandung der Kollimatoroptik dazu dient, einen Passierstrahlenanteil zuzulassen, so dass von der Lichtquelle emittierte Lichtanteile die Kollimatoroptik passieren können, um unmittelbar zu dem Reflektor zu gelangen.

Insbesondere passiert der radial äußere Lichtanteil die Kollimatoroptik vollständig, d. h., dringt nicht in diese ein oder wird von dieser nicht gebrochen.

Im Sinne der Erfindung wird deutlich gemacht, dass der Passierabstand insbesondere dazu dient, dass gewährleistet ist, dass der radial äußere LichtanteH die Licht brechenden Seitenwandabschnitte der Höhlung passieren kann, um zu dem Reflektor zu gelangen.

Die Kollimatoroptik ist entlang der optischen Achse der Kollimatoroptik von der Lichtquelle beabstandet angeordnet.

Eine Lichtquelle in Form einer LED emittiert in der Regel Licht innerhalb eines 180° Raumbereiches gemäß einer Lambert'schen Verteilung. Die optische Achse entspricht in der Regel einem Normalenvektor zu der Anordnungsebene der LEDs, die z. B. von einer Platine bereitgestellt werden kann.

Der Reflektor ist beispielsweise ein Kunststoffspritzgießteil, das insbesondere an seiner Innenseite zur Erzielung einer hochreflektiven Reflektionsfläche mit Metall, z. B. mit Silber, bedampft ist. Insbesondere ist die Reflektionsfläche des Reflektors hochverspiegelt ausgebildet. Der Reflektor ist vorteilhafterweise parabolförmig oder im wesentlichen parabolförmig ausgebildet. Die Lichtquelle ist vorteilhaft im Brennpunkt des Reflektors angeordnet.

Der Reflektor ist weiter vorteilhafterweise dazu ausgebildet, sich mit seinem der Lichtquelle zugewandten Abschnitt bis an eine Anordnungsebene der Lichtquelle heran zu erstrecken, oder sich bis nahe an diese Anordnung heran zu erstrecken. Hierdurch gelingt es, maximal viel von der Lichtquelle emittiertes Licht einzufangen und die Leuchte effizient auszubilden.

Gemäß einer weiteren vorteilhaften Ausgestaltung der Erfindung erstreckt sich der Reflektor bis nahe an ein innere Wandung eines Gehäuses der Leuchte heran. Hierdurch wird eine Leuchte mit einer sehr großen Apertur erreicht, die eine sehr eng abstrahlende Lichtverteilung ermöglicht.

Gemäß einer weiteren vorteilhaften Ausgestaltung der Erfindung weist der Reflektor eine axiale Bauhöhe auf, die eine axiale Bauhöhe der Totalreflektionsflächen der Kollimatoroptik übersteigt. Die axiale Bauhöhe bezieht sich auf eine Richtung der optischen Achse der Kollimatoroptik.

Die Kollimatoroptik weist vorteilhafterweise Totalreflektionsflächen auf. Dabei ist weiter vorteilhafterweise vorgesehen, dass die Kollimatoroptik einen Linsenabschnitt aufweist, der ein zentrales Lichtbündel kollimiert, und Totalreflektionsflächen, die ein das zentrale Lichtbündel umgebendes Lichtbündel kollimieren. Die Totalreflektionsflächen der Kollimatoroptik erstrecken sich schalenförmig um einen Mittelbereich der Kollimatoroptik herum.

Der Reflektor kann gemäß dieser vorteilhaften Ausgestaltung der Erfindung eine axiale Bauhöhe aufweisen, die deutlich größer ist, als die axiale Bauhöhe der Totalreflektionsfläche der Kollimatoroptik.

Hierdurch wird die Möglichkeit bereitgestellt, einen Reflektor unter Verwendung herkömmlicher Fertigungstechniken auf einfache Weise herzustellen, die Kollimatoroptik aber mit einer nur sehr geringen Bauhöhe auszustatten, so dass die Herstellung der Kollimatoroptik vereinfacht ist.

Gemäß einer besonders vorteilhaften Ausgestaltung der Erfindung weist die Kollimatoroptik einen maximalen Außendurchmesser auf, der größer ist, als 30 mm, insbesondere größer als 35 mm, weiter insbesondere größer als 40 mm, weiter insbesondere größer als 45 mm, weiter insbesondere größer als 50 mm, weiter insbesondere größer als 55 mm, weiter insbesondere größer als 60 mm, weiter insbesondere größer als 70 mm, weiter insbesondere größer als 80 mm, weiter insbesondere größer als 90 mm, weiter insbesondere größer als 100 mm.

Bei dieser Variante der Erfindung wird die Herstellung einer sehr großen Kollimatoroptik für große Leuchten mit entsprechend hoher Lichtleistung möglich, wobei die Kollimatoroptik selbst nur eine geringe axiale Bauhöhe aufweisen muss.

Gemäß einer weiteren vorteilhaften Ausgestaltung der Erfindung weist die Leuchte eine rotationssymmetrische Lichtverteilung auf. Gemäß einer alternativen Ausgestaltung der Erfindung weist die Kollimatoroptik eine rotationsasymmetrische Lichtverteilung auf.

Gemäß einer vorteilhaften Ausgestaltung der Erfindung ist die Kollimatoroptik an dem Reflektor befestigt. Hierzu kann der Reflektor Halteflächen umfassen, die mit entsprechenden Gegenhalteflächen an der Kollimatoroptik zusammenwirken.

Eine Befestigung der Kollimatoroptik an dem Reflektor kann z. B. unter Verwendung von Federriegel- oder Schnappelementen erfolgen.

Beispielsweise kann die Kollimatoroptik in Axialrichtung an dem Reflektor festgelegt werden. Weiter alternativ kann der Reflektor auch aus mehreren Teilen, z. B. aus zwei Schalenteilen, bestehen, die aneinander befestigbar sind, z. B. clipsbar befestigbar sind, und zwischen sich die Kollimatoroptik einclipsen und/oder haltern können.

Besonders vorteilhaft ist eine relative Festlegung der Kollimatoroptik an dem Reflektor derart vorgesehen, dass eine Handhabungseinheit bereitgestellt wird. Die Handhabungseinheit kann gemeinsam an einem Gehäuse der Leuchte, mittelbar oder unmittelbar an dem Gehäuse, festgelegt werden.

Wesentlich ist, dass Kollimatoroptik und Reflektor relativ zueinander eine definierte feste Positionierung einnehmen.

Gemäß einer weiteren vorteilhaften Ausgestaltung der Erfindung weist die Kollimatoroptik einen Positionierflansch auf. Dieser ermöglicht eine elegante und einfache Konstruktion zur Festlegung der Kollimatoroptik an dem Reflektor und beeinträchtigt die Fertigung auch großer Kollimatoroptiken nicht.

Gemäß einer weiteren vorteilhaften Ausgestaltung der Erfindung erstreckt sich die Kollimatoroptik mit dem Positionierflansch bis nahe an eine innere Wandung des Reflektors heran. Insbesondere erstreckt sich der Positionierflansch bis nahe an einer innere Wandung des Reflektors im Bereich seines freien, von der Lichtquelle maximal beabstandeten Endabschnittes heran.

Hierdurch wird eine besonders einfache Konstruktion ermöglicht.

Gemäß einer weiteren vorteilhaften Ausgestaltung der Erfindung tritt der radial äußere Lichtanteil nach Reflektion an dem Reflektor durch den Positionierflansch hindurch. Hierdurch wird eine besonders einfache Konstruktion ermöglicht.

Der Positionierflansch kann kreisringartig ausgebildet sein und den Mittel- oder Kernabschnitt der Kollimatoroptik ringförmig umgeben. Von der Erfindung ist auch umfasst, wenn der Positionierflansch von einzelnen oder mehreren Stegen gebildet ist.

Gemäß einer weiteren vorteilhaften Ausgestaltung der Erfindung ist vorgesehen, dass der Reflektor an einem Gehäuse der Leuchte befestigt ist. Hierdurch ist eine besonders einfache Konstruktion und Bauweise der erfindungsgemäßen Leuchte ermöglicht.

Gemäß einer weiteren vorteilhaften Ausgestaltung der Erfindung weist die Leuchte im Lichtpfad stromabwärts der Kollimatoroptik ein Linsenelement auf. Dieses kann die Lichtverteilung ändern, z. B. den Abstrahlwinkel vergrößern. Während der eigentliche Lichtantrieb, umfassend die Lichtquelle, die Kollimatoroptik und den Reflektor, ein paralleles oder ein im wesentlichen paralleles Lichtstrahlenbündel generiert, und dieses für eine Weiterverarbeitung durch das nachfolgende Linsenelement zur Verfügung stellt, kann das Linsenelement die Lichtverteilung oder die Strahlform beeinflussen, beispielsweise formen, den Strahl aufweiten oder beispielsweise auch eine ovale Lichtverteilung generieren. Hierzu kann das Linsenelement z. B. als Sammellinse oder als Zerstreuungslinse ausgebildet sein.

Gemäß einer weiteren vorteilhaften Ausgestaltung der Erfindung ist vorgesehen, dass das Linsenelement als Zerstreuungslinse ausgebildet ist.

Gemäß einer vorteilhaften Ausgestaltung der Erfindung weist das Linsenelement eine konkav gekrümmte Lichteintrittsfläche und eine plane oder eine geringfügig konvex gekrümmte Lichtaustrittsfläche auf.

Von der Erfindung ist auch umfasst, wenn das stromabwärts der Kollimatoroptik angeordnete Linsenelement nach Art einer Linsenplatte ausgebildet ist, und beispielsweise eine Vielzahl von kleinen Linsenelementen oder Mikrolinsenelementen aufweist.

Diesbezüglich wird z. B. auf Linsenplatten verwiesen, wie sie in der deutschen Patentanmeldung DE 10 2008 063 369 A1 der Anmelderin in zahlreichen unterschiedlichen Varianten offenbart und beschrieben sind.

Der Inhalt dieser Patentanmeldung wird hiermit zur Vermeidung von Wiederholungen in den Inhalt der vorliegenden Patentanmeldung vollumfänglich mit eingeschlossen, dies auch zu dem Zwecke, Merkmale aus dieser Patentanmeldung bei Bedarf auch in die Ansprüche der vorliegenden Patentanmeldung mit aufzunehmen.

Gemäß einer weiteren vorteilhaften Ausgestaltung der Erfindung kann sich das Linsenelement bis an eine innere Wandung eines Gehäuses der Leuchte heran erstrecken. Dabei kann weiter vorteilhafterweise vorgesehen sein, dass das Linsenelement als singuläres Linsenelement ausgebildet ist.

Weiter vorteilhafterweise kann die Leuchte ein kreiszylindrisches oder im wesentlichen kreiszylindrisches Gehäuse aufweisen. Dies ermöglicht eine besonders einfache Konstruktion der erfindungsgemäßen Leuchte.

Gemäß einer weiteren vorteilhaften Ausgestaltung der Erfindung umfasst die Kollimatoroptik einen kragenartigen Abschnitt, der sich entlang einer Richtung hin zu einer Anordnungsebene der Lichtquelle erstreckt. Der kragenartige Abschnitt kann insbesondere dazu vorgesehen sein, zu verhindern, dass von der Lichtquelle emittierte Lichtanteile auf eine Innenwandung des Gehäuses gelangen ohne, dass sie zuvor von einem Reflektor reflektiert worden sind, oder ohne zuvor durch die Kollimatoroptik hindurch getreten zu sein und insbesondere abgelenkt worden zu sein. Insbesondere bei Verwendung von großen oder ausgedehnten Lichtquellen sind bei bestimmten Größenverhältnissen Lichtanteile vorhanden, die ohne Verwendung eines solchen kragenartigen Abschnittes unter Umständen die Kollimatoroptik zwar passieren können, aber nicht auf den Reflektor treffen, sondern unmittelbar auf Innenwandungsabschnitte des Gehäuses gelangen. Hier können sich insoweit ungewünschte Blendungseffekte ergeben, nämlich z. B. punktförmig konzentrierte hohe Lichtverteilungen auf der Innenwand des Gehäuses. Der kragenartige Abschnitt kann verhindern, dass solche Lichtanteile direkt auf den Innenwandungsabschnitt des Gehäuses der Leuchte treffen.

Gemäß einer weiteren vorteilhaften Ausgestaltung der Erfindung kann vorgesehen sein, dass der kragenartige Abschnitt einen Abschnitt einer Fresnellinse ausbildet.

Gemäß einer weiteren vorteilhaften Ausgestaltung der Erfindung ist vorgesehen, dass der kragenartige Abschnitt verhindert, dass von der Lichtquelle emittierte Lichtanteile direkt, d. h. ohne vorherige Reflektion an dem Reflektor oder ohne zuvor durch die Kollimatoroptik hindurch getreten zu sein, auf einen Innenwandungsabschnitt eines Gehäuses der Leuchte treffen.

Gemäß einer weiteren vorteilhaften Ausgestaltung der Erfindung ist vorgesehen, dass das durch eine Lichtaustrittsfläche der Kollimatoroptik austretende Licht ein paralleles oder im wesentlichen paralleles Lichtstrahlenbündel bereitstellt.

Gemäß einer weiteren vorteilhaften Ausgestaltung der Erfindung kann der durch eine Lichtaustrittsfläche der Kollimatoroptik austretende Lichtanteil, also das durch die Kollimatoroptik gebündelte und das durch den Reflektor gebündelte Licht, ein paralleles oder ein im wesentliches paralleles Lichtstrahlenbündel bereitstellen. Dies ermöglicht eine besonders einfache Weiterverarbeitung dieses Lichtes durch nachfolgende, im Lichtpfad angeordnete Elemente, wie Streuscheiben oder Zerstreuungslinsen.

Gemäß einer weiteren vorteilhaften Ausgestaltung der Erfindung ist im Lichtpfad hinter der Kollimatoroptik eine Streuscheibe angeordnet. Diese kann einer Homogenisierung und Vergleichmäßigung des Lichtes dienen.

Die Erfindung bezieht sich gemäß einem weiteren Aspekt auf ein System zur Bereitstellung von Gebäudeleuchten nach Anspruch 15.

Der Erfindung liegt die Aufgabe zugrunde, ein System bereitzustellen, mit dem mit einfachen Mitteln eine Änderung der Lichtverteilung der Leuchte möglich wird, bzw. die einen Rückgriff auf viele Gleichteile und/oder die Bereitstellung eines Modulsystems ermöglicht.

Die Erfindung löst diese Aufgabe mit den Merkmalen des Anspruches 15.

Zur Vermeidung von Wiederholungen wird auf die obigen Ausführungen verwiesen, die analog für die Erfindung nach Anspruch 15 gelten.

Das Prinzip der Erfindung besteht darin, ein System mit einer ersten Leuchte und einer zweiten Leuchte bereitzustellen, die der zuvor beschriebenen Leuchte entsprechen oder im wesentlichen entsprechen.

Dabei weist die erste Leuchte ein erstes Linsenelement und die zweite Leuchte ein zweites Linsenelement auf. Die beiden Linsenelemente sind unterschiedlich ausgebildet, und erlauben die Generierung unterschiedlicher Lichtverteilungen. Beispielsweise kann ein erstes Linsenelement eine Lichtverteilung mit einem ersten Abstrahlwinkel und ein zweites Linsenelement eine Lichtverteilung mit einem zweiten, gegenüber dem ersten Abstrahlwinkel geänderten, Abstrahlwinkel bereitstellen. Die unterschiedlichen Abstrahlwinkel können durch unterschiedliche Ausbildung der Grenzflächen der Linsenelemente, insbesondere der Zerstreuungslinsen erreicht werden.

Von der Erfindung ist auch umfasst, wenn das erste Linsenelement eine rotationssymmetrische Lichtverteilung generiert und das zweite Linsenelement eine rotationsasymmetrische Lichtverteilung.

Die erfindungsgemäße Leuchte kann mit einem singulären Linsenelement ausgestattet werden. Die Leuchte kann ein zylindrisches Gehäuse aufweisen, beispielsweise ein kreiszylindrisches Gehäuse. Das singuläre Linsenelement kann eine kreiszylindrische Außenumfangsfläche aufweisen, und sich mit einem Außendurchmesser bis an die Innenumfangsfläche des Gehäuses heran erstrecken.

Das singuläre Linsenelement kann eine konkav gekrümmte Lichteintrittsfläche und eine plane oder geringfügig konvex gekrümmte Lichtaustrittsfläche aufweisen. Die Eintrittsfläche kann zylindrisch gekrümmt oder doppelt konkav, also sphärisch oder nahezu sphärisch, gekrümmt sein.

Das singuläre Linsenelement weist insbesondere eine konkave Lichteintrittsfläche auf, die sich von dem Randbereich an einer Seite des Gehäuses bis zum 180° gegenüberliegenden Randbereich des Gehäuses erstreckt. Das Linsenelement kann insbesondere damit das gesamte, von der Kollimatoroptik emittierte Licht einfangen.

Je stärker die konkave Krümmung der Lichteintrittsfläche des Linsenelementes ist, umso stärker ist die Streuungswirkung. Mit unterschiedlichen Linsenelementen, die unterschiedliche gekrümmte Lichteintrittsflächen aufweisen, können damit unterschiedliche Abstrahlwinkel der Leuchte erreicht werden. Beispielsweise kann durch Austausch eines Linsenelementes eine Spot-, eine Flood-, eine Wideflood- oder auch eine ovale Lichtverteilung generiert werden.

Die Leuchte kann ein Gehäuse aufweisen, mit einem Gehäuseabschnitt, der das Linsenelement trägt. Der Gehäuseabschnitt kann von den übrigen Gehäuseteilen abnehmbar, beispielsweise abclippsbar oder abschraubbar ausgebildet sein. Das Linsenelement kann von Abschnitten des Gehäuses auch übergriffen oder überfangen und damit an dem Gehäuse der Leuchte gehalten werden.

Dadurch, dass die erfindungsgemäße Leuchte vorteilhaft nur ein einziges Linsenelement aufweist, das sogenannte singuläre Linsenelement, besteht die Möglichkeit, mit sehr einfachen Mitteln ungewünschte Streulichtanteile zu vermeiden:
Es besteht erfindungsgemäß nämlich insbesondere die Möglichkeit, dass die Außenumfangsfläche des Linsenelementes geschwärzt wird. Hierdurch werden Totalreflektionen in diesem Bereich gänzlich unterbunden, und Streulichtanteile, die ansonsten nicht zu vermeiden wären, vollständig unterdrückt.

Die erfindungsgemäße Leuchte ermöglicht damit die Erzielung einer Lichtverteilung, wie sie in ähnlicher Weise unter dem Begriff "Darklight", in der Reflektortechnik, von anderen Leuchten her bekannt ist, bei der unerwünschte Streulichteffekte eliminiert sind.

Gemäß der Erfindung wird eine Leuchte bereitgestellt, die ein sehr großes Linsenelement aufweisen kann. Dieses kann einen Außendurchmesser aufweisen, der so groß oder nahezu so groß ist, wie der Innenumfangsdurchmesser des Gehäuses. Damit kann das Linsenelement eine Erstreckung aufweisen, die der Erstreckung der Lichtaustrittsfläche der Kollimatoroptik entspricht, oder nahezu entspricht. Damit kann insbesondere eine effiziente Verarbeitung des Lichtes innerhalb der Leuchte erfolgen.

Durch die plane oder im wesentlichen plane oder höchstens geringfügig gewölbte Lichtaustrittsfläche des Linsenelementes kann auch für unterschiedliche Linsenelemente und unterschiedliche gekrümmte Lichteintrittsflächen der Linsenelemente eine gleiche Gestaltung oder ähnliche äußere Gestaltung der Leuchte, und damit ein homogenes Ansehverhalten erreicht werden. Der Leuchte kann man insoweit von außen nicht - oder jedenfalls nicht unbedingt - ansehen, welche Art von Linsenelement verbaut ist. Damit können von außen gleich oder sehr ähnlich aussehende Leuchten verwendet werden, die unterschiedliche Lichtverteilungen generieren. Dies ermöglicht beispielsweise, wenn eine Vielzahl von Leuchten mit unterschiedlichen Lichtverteilungen nebeneinander montiert ist, die Erzielung unterschiedlicher Lichtverteilungen der einzelnen Leuchten, ohne dass äußerlich unterschiedliche Leuchten verwendet werden.

Die Kollimatoroptik der erfindungsgemäßen Leuchte weist insbesondere eintrittsseitig eine Höhlung auf. Die Höhlung kann von einer Deckenwand und von einer Seitenwand bereitgestellt sein. Die Deckenwand kann plan oder konvex gekrümmt ausgebildet sein, und mit einem gegenüberliegenden, auf der Lichtaustrittsseite der Kollimatoroptik angeordneten zentralen Abschnitt eine Sammellinse, insbesondere eine bi-konvexe Sammellinse, ausbilden.

Die Seitenwandbereiche der Höhlung sind von einer Totalreflektionsfläche umgeben. Die Totalreflektionsfläche kann die äußere Seitenwandung der Kollimatoroptik bereitstellen und z. B. im wesentlichen eine Schalenform ausbilden.

Das erfindungsgemäße System nach Anspruch 15 umfasst zwei Leuchten, nämlich wenigstens eine erste Leuchte und eine zweite Leuchte.

Gemäß einer vorteilhaften Ausgestaltung nach Anspruch 15 ist das System dadurch gekennzeichnet, dass das erste Linsenelement und das zweite Linsenelement jeweils als Zerstreuungslinse ausgebildet ist.

Gemäß einer weiteren vorteilhaften Ausgestaltung ist das System dadurch gekennzeichnet, dass die erste Lichtverteilung einen ersten, kleineren Abstrahlwinkel bereitstellt und die zweite Lichtverteilung einen zweiten, größeren Abstrahlwinkel bereitstellt.

Gemäß einer weiteren vorteilhaften Ausgestaltung der Erfindung ist das System dadurch gekennzeichnet, dass die erste Lichtverteilung rotationssymmetrisch ausgebildet ist und die zweite Lichtverteilung rotationssymmetrisch ausgebildet ist.

Gemäß einer weiteren vorteilhaften Ausgestaltung der Erfindung ist das Linsenelement lösbar an dem Gehäuse festlegbar. Hierdurch kann eine einfache Handhabung einer Austauschbarkeit des Linsenelementes zur Erzielung einer geänderten Lichtverteilung der Leuchte erreicht werden.

Gemäß einer weiteren vorteilhaften Ausgestaltung der Erfindung ist das Linsenelement austauschbar ausgebildet. Hierdurch wird eine Leuchte bereitgestellt, die durch bloßen Austausch eines Linsenelementes die Erzeugung einer geänderten Lichtverteilung ermöglicht.

Gemäß einer weiteren vorteilhaften Ausgestaltung der Erfindung ist das Linsenelement rotationssymmetrisch ausgebildet. Dies ermöglicht die Bereitstellung einer Spot-, Flood-, oder Wideflood-Lichtverteilung.

Insbesondere kann vorgesehen sein, dass ein erstes Linsenelement rotationssymmetrisch ausgebildet ist, und ein zweites Linsenelement ebenfalls rotationssymmetrisch ausgebildet ist. Die beiden Linsenelemente können in ihrem Montagezustand an der Leuchte unterschiedliche Lichtverteilungen, z. B. unterschiedliche Abstrahlwinkel, erzeugen. So kann beispielsweise mit einem ersten Linsenelement eine erste enge Lichtverteilung, z. B. eine Spot-Lichtverteilung, und mit einem zweiten Linsenelement im montierten Zustand eine demgegenüber verbreiterte Lichtverteilung, z. B. eine Flood- oder Wideflood-Lichtverteilung, mit einem entsprechend größeren Abstrahlwinkel generiert werden.

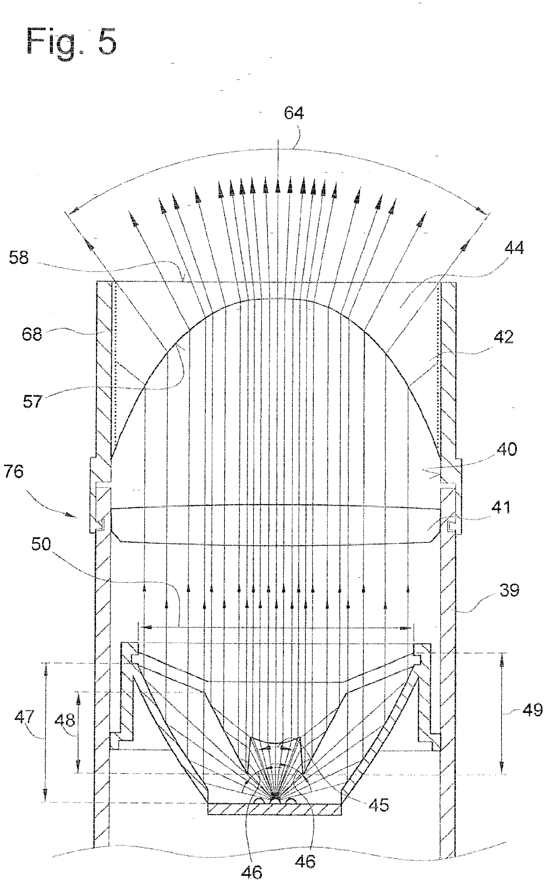

Gemäß einer weiteren vorteilhaften Ausgestaltung der Erfindung ist das Linsenelement rotationsasymmetrisch ausgebildet, und stellt eine ovale Lichtverteilung bereit. Das rotationsasymmetrisch ausgebildete Linsenelement kann eine zylindrische, konkav gekrümmte Lichteintrittsfläche aufweisen, und das Licht in einer Richtung entlang einer Ebene aufspreizen, und das Licht entlang einer zweiten Ebene, die zu der ersten Ebene senkrecht ausgerichtet ist, unbeeinflusst durchlassen, oder unter einem anderen, geringeren Winkel aufspreizen. Zur Vermeidung von Wiederholungen wird verwiesen auf die Figuren 5a bis 5d der eingangs in Bezug genommenen nachveröffentlichten Patentanmeldung der Anmelderin und die dortigen Beschreibungspassagen, die hiermit in den Inhalt der vorliegenden Patentanmeldung mit eingeschlossen werden.

Das dort dargestellte und beschriebene Linsenelement kann auch vorliegend verwendet werden.

Gemäß einer weiteren vorteilhaften Ausgestaltung der Erfindung weist das Linsenelement eine kuppelartig konkav gewölbte Lichteintrittsfläche auf. Hierdurch besteht die Möglichkeit, eine rotationssymmetrische Lichtverteilung der Leuchte mit einfachen Mitteln zu erreichen.

Gemäß einer weiteren vorteilhaften Ausgestaltung der Erfindung weist das Linsenelement eine zylindrisch konkav gewölbte Lichteintrittsfläche auf. Dies ermöglicht mit konstruktiv einfachen Mitteln die Bereitstellung einer Leuchte mit einer rotationsasymmetrischen Lichtverteilung, z. B. einer ovalen Lichtverteilung.

Gemäß einer weiteren vorteilhaften Ausgestaltung der Erfindung umfasst die Höhlung eine Deckenwand, der an einer Lichtaustrittsfläche der Kollimatoroptik ein zentraler Abschnitt gegenüberliegt, wobei die Deckenwand mit dem zentralen Abschnitt eine Sammellinse, z. B. eine bi-konvexe oder eine plan-konvexe Sammellinse, ausbildet. Sämtliche Lichtanteile, die von der LED ausgehend an die Deckenwand treffen, werden von dort zu dem zentralen Abschnitt geleitet. Der zentrale Abschnitt bewirkt insoweit eine Bündelung der Lichtanteile.

Gemäß einer weiteren vorteilhaften Ausgestaltung der Erfindung ist eine Seitenwand der Höhlung von einer Totalreflektionsfläche umgeben. Bei einer ersten Variante der Erfindung ist die Totalreflektionsfläche im wesentlichen schalenförmig ausgebildet. Bei einer alternativen Ausgestaltung der Erfindung ist die Totalreflektionsfläche nach Art einer Fresnel-Linse ausgebildet und in mehrere Totalreflektionsflächenabschnitte unterteilt.

Dies bietet die Möglichkeit einer optimalen Lichtweiterleitung und Bündelung des Lichtes.

Gemäß einer weiteren vorteilhaften Ausgestaltung der Erfindung ist die Kollimatoroptik dazu ausgebildet, Licht in einem Brennpunkt oder in einem Brennpunktbereich zu bündeln. Dies ermöglicht die Erzielung einer sehr hohen Effizienz der Leuchte.

Gemäß einer weiteren vorteilhaften Ausgestaltung der Erfindung ist das Linsenelement zwischen der Kollimatoroptik und dem Brennpunkt oder dem Brennpunkbereich angeordnet. Dies ermöglicht die Bereitstellung einer sehr effizienten, kleinbauenden, insbesondere in Axialrichtung kurzbauenden Leuchte.

Gemäß einer weiteren vorteilhaften Ausgestaltung der Erfindung weist das Linsenelement einen Außendurchmesser auf, der einem Außendurchmesser der Kollimatoroptik und/oder einem Außendurchmesser des Reflektors entspricht oder im wesentlichen entspricht. Dies bietet die Möglichkeit einer besonders einfachen Konstruktion einer erfindungsgemäßen Leuchte, insbesondere unter Berücksichtigung des Umstandes, dass hierdurch auch eine Skalierbarkeit der Leuchte, bei unverändertem Aufbau, für unterschiedliche Größen der Leuchte, also beispielsweise für unterschiedliche Durchmesser der Gehäuse, möglich ist.

Darüber hinaus kann mit dieser Bauform eine besonders effiziente Leuchte bereitgestellt werden.

Gemäß einer weiteren vorteilhaften Ausgestaltung der Erfindung ist das Linsenelement nahe einer Lichtaustrittsöffnung des Gehäuses angeordnet. Dies ermöglicht eine besonders kleine Bauweise der erfindungsgemäßen Leuchte.

Gemäß einer weiteren vorteilhaften Ausgestaltung der Erfindung weist das Gehäuse im Bereich seiner Lichtaustrittsöffnung eine Ringstirnfläche auf. Die Lichtaustrittsfläche des Linsenelementes kann bündig oder nahezu bündig zu der Ringstirnfläche angeordnet sein, oder relativ zu der Ringstirnfläche geringfügig nach innen versetzt angeordnet sein. Damit wird die Möglichkeit bereitgestellt, eine axial sehr kurz bauende Leuchte zu konstruieren.

Gemäß einer weiteren vorteilhaften Ausgestaltung der Erfindung ist zwischen der Kollimatoroptik und dem Linsenelement eine Streuscheibe angeordnet. Diese kann beispielsweise zur Verhinderung einer Schlierenbildung eine geringe Diffusität auf den Lichtstrom aufzwingen und das Licht insgesamt weicher zeichnen.

Weitere Vorteile der Erfindung ergeben sich aus den nicht zitierten Unteransprüchen, sowie anhand der nachfolgenden Beschreibung der in den Zeichnungen dargestellten Ausführungsbeispiele. Darin zeigen:
- Fig. 1a: in einer teilgeschnittenen schematischen Ansicht ein erstes Ausführungsbeispiel einer erfindungsgemäßen Leuchte unter Veranschaulichung eines Lichtantriebs mit einer drei LEDs umfassenden Lichtquelle, einer Kollimatoroptik und einem Reflektor, der ein paralleles Lichtstrahlenbündel generiert, wobei zusätzlich eine Streuscheibe angedeutet ist,
- Fig. 1b: das Ausführungsbeispiel der Leuchte der Fig. 1a in einer vergrößerten Einzeldarstellung gemäß Teilkreis Ib in Fig. 1a, unter Veranschaulichung der unterschiedlichen, von der mittleren LED der Lichtquelle emittierten Lichtanteile,
- Fig. 1c: ein weiteres Ausführungsbeispiel einer erfindungsgemäßen Leuchte in einer Darstellung gemäß Fig. 1b, wobei der Reflektor bis an die Anordnungsebene der LED heranreicht,
- Fig. 1d: das Ausführungsbeispiel der Fig. 1c, wobei zusätzlich eine Erläuterung der unterschiedlichen Lichtanteile erfolgt,
- Fig. 2: ein weiteres Ausführungsbeispiel einer erfindungsgemäßen Leuchte, die als Strahler ausgebildet und die an einer Deckenwand eines Gebäudes angeordnet ist, wobei mit der Leuchte eine erste Lichtverteilung auf einer Seitenwand generiert wird,
- Fig. 3: ein weiteres Ausführungsbeispiel einer erfindungsgemäßen Leuchte in einer Darstellung gemäß Fig. 2, mit der eine zweite bzw. eine dritte Lichtverteilung generiert wird,
- Fig. 4: ein weiteres Ausführungsbeispiel einer erfindungsgemäßen Leuchte in einer teilgeschnittenen schematischen Prinzipdarstellung unter Verwendung eines Lichtantriebs gemäß Fig. 1a, wobei zusätzlich ein Gehäuse der Leuchte und eine erste Zerstreuungslinse dargestellt ist,
- Fig. 5: ein weiteres Ausführungsbeispiel einer erfindungsgemäßen Leuchte in einer Darstellung gemäß Fig. 4, wobei eine zweite, von der ersten Zerstreuungslinse unterschiedliche Zerstreuungslinse dargestellt ist,
- Fig. 6: in einer schematischen perspektivischen Einzeldarstellung einen Reflektor und eine Kollimatoroptik eines Ausführungsbeispiels einer erfindungsgemäßen Leuchte, bei der der Reflektor aus zwei Schalenelementen besteht, die aneinander in Radialrichtung befestigbar sind und die zwischen sich die Kollimatoroptik halten können,
- Fig. 7: in einer schematischen perspektivischen Einzeldarstellung einen Reflektor und eine Kollimatoroptik eines Ausführungsbeispiels einer erfindungsgemäßen Leuchte, wobei eine Befestigung der Kollimatoroptik an dem Reflektor infolge einer axialen Steckbewegung unter Zuhilfenahme von Verriegelungslaschen möglich ist,
- Fig. 8a: ein weiteres Ausführungsbeispiel einer erfindungsgemäßen Leuchte in einer Darstellung vergleichbar der Fig. 4 unter Weglassung der Zerstreuungslinse und unter Veranschaulichung eines an sich ungewünschten, von der Lichtquelle emittierten Lichtstrahlenanteils, der ohne vorherige Reflektion an einem Reflektor und ohne zuvor durch optische Grenzflächen oder Totalreflektionsflächen der Kollimatoroptik beeinflusst worden zu sein, auf die Innenwandung des Gehäuses der Leuchte trifft und dort reflektiert wird,
- Fig. 8b: ein weiteres Ausführungsbeispiel in einer Darstellung gemäß der Fig. 8a in einer vergrößerten schematischen Teilkreisdarstellung etwa gemäß Teilkreis VIIIb in Fig. 8a, unter Veranschaulichung eines zusätzlichen, an der Kollimatoroptik angeordneten Blendkragens oder kragenartigen Abschnittes zur Verhinderung der zuvor beschriebenen ungewünschten Lichtanteile,
- Fig. 9: in einer Darstellung vergleichbar der Darstellung der Fig. 8b ein weiteres Ausführungsbeispiel einer erfindungsgemäßen Leuchte mit einer gegenüber Fig. 8b geänderten Kollimatoroptik mit einem kragenartigen Abschnitt, der als Fresnellinse ausgebildet ist, und der gleichermaßen dem Zweck dient, ungewünschte Lichtanteile zu verhindern,
- Fig. 10: ein weiteres Ausführungsbeispiel eines erfindungsgemäßen Lichtantriebs zur Verwendung in einer erfindungsgemäßen Leuchte in einer Darstellung vergleichbar der Darstellung der Fig. 1a, wobei der Lichtantrieb einen Kollimator und zwei ineinander geschachtelt angeordnete Reflektoren aufweist,
- Fig. 11: den Lichtantrieb der Fig. 10 in einer schematischen teilgeschnittenen Draufsicht etwa entlang Ansichtspfeil XI in Fig. 10,
- Fig. 12: ein weiteres Ausführungsbeispiel eines erfindungsgemäßen Lichtantriebs zur Verwendung in einer erfindungsgemäßen Leuchte in einer Darstellung gemäß Fig. 10, wobei der Lichtantrieb ebenfalls zwei ineinander geschachtelt angeordnete Reflektoren mit einer gegenüber Fig. 10 geänderten Befestigung umfasst,
- Fig. 13: in einer teilgeschnittenen, vergrößerten, schematischen Ansicht etwa entlang Teilkreis XIII in Fig. 4 ein weiteres Ausführungsbeispiel einer erfindungsgemäßen Leuchte zur Veranschaulichung einer Positionierung von Kollimatoroptik und Reflektor relativ zueinander unter Zuhilfenahme eines gesondertes Klemmrings, und
- Fig. 14: in einer Darstellung gemäß Fig. 13 ein weiteres Ausführungsbeispiel einer erfindungsgemäßen Leuchte unter Veranschaulichung eines gegenüber dem Ausführungsbeispiel der Fig. 13 geänderten Klemmringes.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

Ausführungsbeispiele erfindungsgemäßer Leuchten sind in den Zeichnungen jeweils mit 10 bezeichnet.

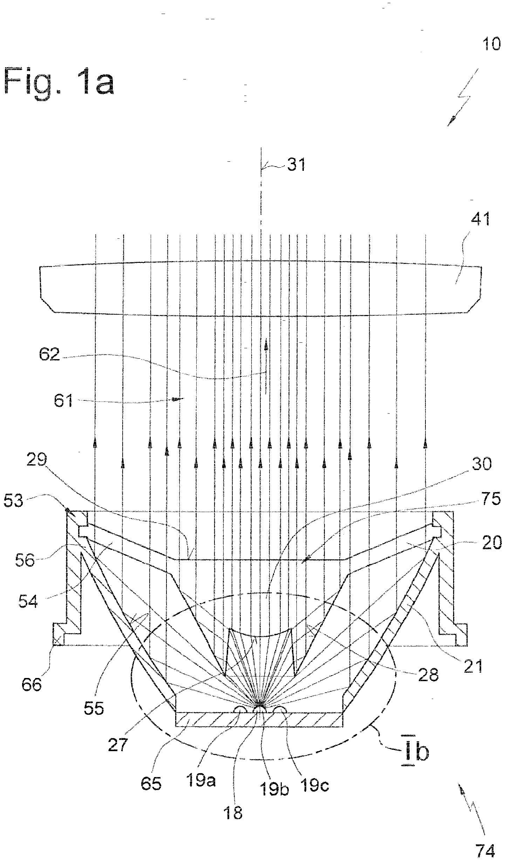

Fig. 1a zeigt in einer schematischen perspektivischen Ansicht zur Veranschaulichung des lichttechnischen Prinzips das Kernstück einer erfindungsgemäßen Leuchte 10, den sogenannten Lichtantrieb 74. Dieser umfasst eine Lichtquelle 18, eine Kollimatoroptik 20 und einen Reflektor 21. Der Lichtantrieb generiert ein paralleles Lichtstrahlenbündel 61 oder ein im wesentlichen paralleles Lichtstrahlenbündel 61.

Zusätzlich gezeigt ist in Fig. 1a auch eine Streuscheibe 41. Das genaue lichttechnische Prinzip wird später erläutert.

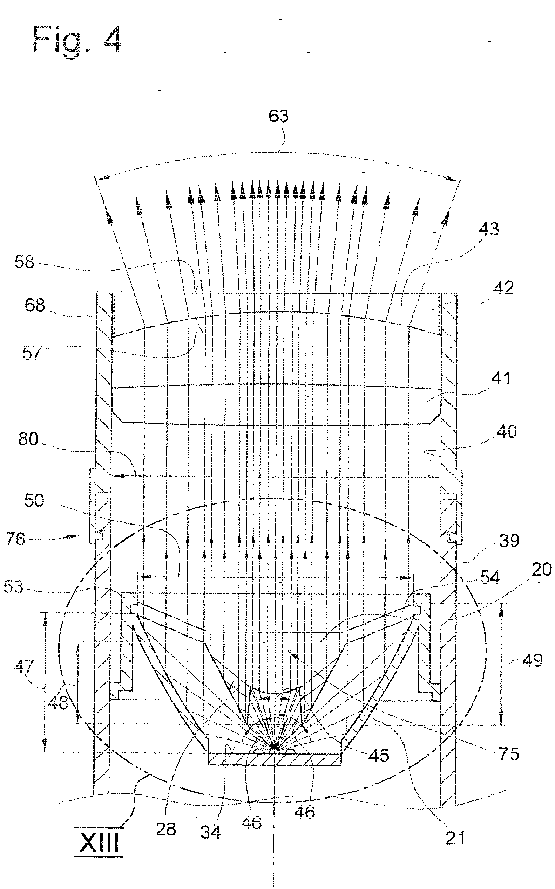

Im Lichtpfad 62 hinter dem Lichtantrieb 74 befindet sich gemäß der Ausführungsbeispiele 4 und 5 jeweils noch eine Zerstreuungslinse 42. Dabei kann eine erste Zerstreuungslinse 43 gemäß Fig. 4 oder eine zweite Zerstreuungslinse 44 gemäß Fig. 5 vorgesehen sein. Die beiden Zerstreuungslinsen 43 und 44 können sich durch die Krümmung ihrer Lichteintrittsfläche 57 und/oder durch die Ausgestaltung der jeweiligen Lichtaustrittsfläche 58 voneinander unterscheiden, um unterschiedliche Lichtverteilungen zu generieren.

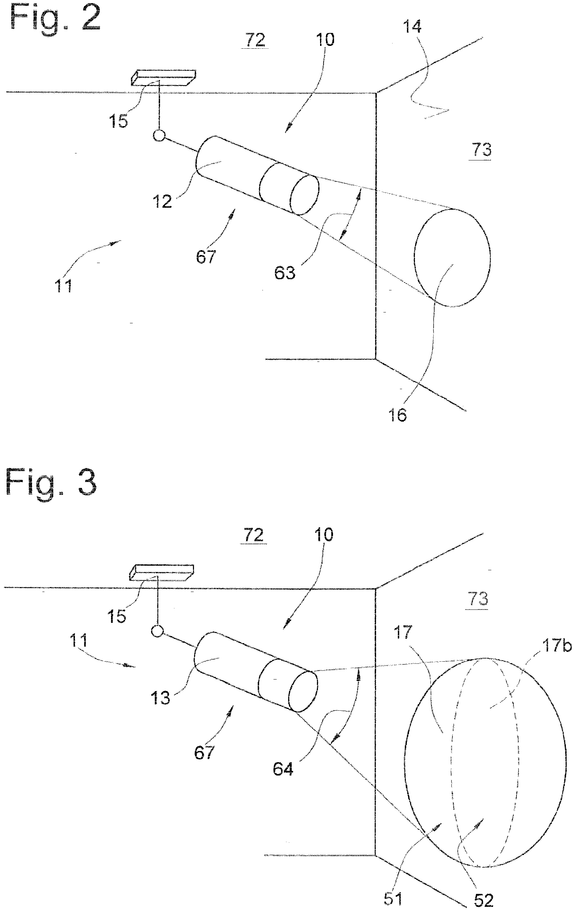

Auf diese Weise können mehrere Leuchten 12, 13 der erfindungsgemäßen Art ein erfindungsgemäßes Leuchtensystem 11 bereitstellen. Dieses wird zunächst grob anhand der Figuren 2 und 3 erläutert:
Die Figuren 2 und 3 zeigen in einer schematischen perspektivischen Ansicht eine erste Leuchte 12 (gemäß Fig. 2) und eine zweite Leuchte 13 (Fig. 3). Die beiden Leuchten 12, 13 bilden ein erfindungsgemäßes Leuchtensystem 11.

Gemäß den Figuren 2 und 3 dienen die Leuchten jeweils zur Ausleuchtung einer Gebäudefläche 14, die als Seitenwand 73 eines Gebäuderaumes ausgebildet ist. Die beiden Leuchten 12, 13 sind im Bereich einer Montagestelle 15 an einer Deckenwand 72 des Gebäuderaums befestigt. Sie können z. B. über ein lediglich angedeutetes Gelenk in ihrer Neigung einstellbar sein.

Mit der ersten Leuchte 12 wird eine erste Lichtverteilung 16 und mit der zweiten Leuchte 13 eine zweite Lichtverteilung 17 auf die Gebäudefläche 14 geworfen.

Die erste Lichtverteilung 16 und die zweite Lichtverteilung 17 sind jeweils rotationssymmetrisch ausgebildet und deuten eine kreisförmige, insbesondere homogen ausgeleuchtete Fläche an.

Fig. 3 macht darüber hinaus gestrichelt und alternativ eine dritte Lichtverteilung 17b in Form einer ovalen, also rotationsasymmetrischen Lichtverteilung deutlich.

Die erste Lichtverteilung 16 kann durch einen ersten Abstrahlwinkel 63 und die zweite Lichtverteilung 17 kann durch einen zweiten geänderten Abstrahlwinkel 64 charakterisiert werden.

Die unterschiedlichen Abstrahlwinkel 63, 64 finden ihre Entsprechung auch in den Strahlengängen der Figuren 4 und 5, wobei die Ausführungsbeispiele der Figuren 4 und 5 durch unterschiedliche Krümmungen der Lichteintrittsfläche 57 der jeweiligen Zerstreuungslinse 43, 44 unterschiedliche Abstrahlwinkel 63, 64 erreichen.

Die erfindungsgemäßen Leuchten 12, 13 sind gemäß den Ausführungsbeispielen der Figuren 2 und 3 als Strahler 67 ausgebildet. Von der Erfindung ist aber auch umfasst, wenn die Leuchte als Aufbauleuchte oder Einbauleuchte ausgebildet ist, oder wenn ihre Neigung nicht einstellbar ist.

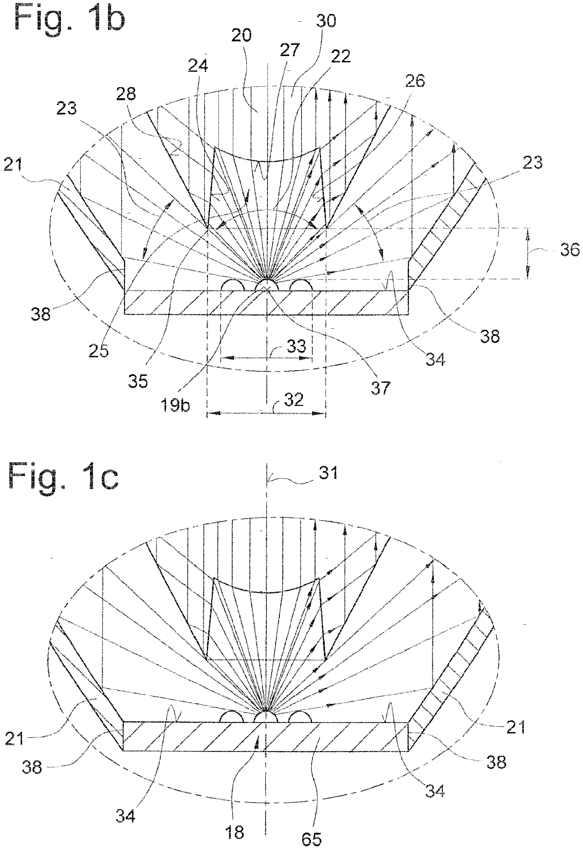

Im Folgenden soll anhand der Figuren 1a und 1b das lichttechnische Prinzip des Lichtantriebes 74 näher erläutert werden:
Ausweislich der Figuren 1a und 1b umfasst die Lichtquelle 18 eine Mehrzahl von LEDs 19a, 19b, 19c. Bei den Ausführungsbeispielen der Figuren 1a und 1b sind jeweils drei LEDs 19a, 19b, 19c dargestellt. Die Zahl der LEDs ist aber beliebig. Die Lichtquelle 18 kann eine LED, aber auch mehrere LEDs umfassen. Wenn mehrere LEDs vorgesehen sind, können diese z. B. im wesentlichen rotationssymmetrisch angeordnet sein. So zeigen die Figuren 1a und 1b zwar jeweils nur drei LEDs. Vorgesehen sein kann aber, dass die jeweils äußeren LEDs 19a, 19c um die mittlere LED 19b herum in einer Ringanordnung angeordnet sind, so dass die Lichtquelle 18 gemäß den Figuren 1a und 1b tatsächlich zwei, drei, vier, fünf, sechs oder mehr LEDs umfasst.

Die LEDs sind auf einer Platine 65 fest montiert. Die Platine definiert mit ihrer Oberseite eine Anordnungsebene 34.

Der Lichtantrieb 74 umfasst gemäß Fig. 1a eine Kollimatoroptik 20. Diese umfasst einen zentralen Abschnitt 75 und einen diesen ringförmig umgebenden Positionierflansch 54.

Der zentrale Abschnitt 75 weist die zur Lichtbündelung beitragenden optischen Grenzflächen 27 und Totalreflektionsflächen 28 auf.

Im Folgenden soll der zentrale Abschnitt 75 der Kollimatoroptik 20 im Detail beschrieben werden:
Ausweislich Fig. 1b umfasst die Kollimatoroptik 20 eine Lichteintrittsfläche 24, die von einer Höhlung 25 bereitgestellt ist.

Die Höhlung weist eine Deckenwand 27 auf, und eine umlaufende Seitenwand 26.

Die Deckenwand 27 ist Bestandteil eines zentral angeordneten Linsenabschnittes 30 der Kollimatoroptik 20 und sorgt für eine Bündelung der auf die Deckenwand 27 treffenden Lichtanteile. Diese sind z. B. in Fig. 4 mit den Bezugszeichen 45 bezeichnet, und werden als zentrales Lichtbündel 45 angesehen.

Das zentrale Lichtbündel wird von einem umgebenden Lichtbündel 46 umgeben (vgl. Fig. 4). Das umgebende Lichtbündel 46 umfasst all diejenigen Lichtanteile, die von der Lichtquelle 18 ausgehend auf die Seitenwandabschnitte 26 der Höhlung 25 treffen. Sie werden von dort, wie am besten aus Fig. 1b ersichtlich, zunächst radial nach außen geworfen und treffen dann auf Totalreflektionsflächen 28 der Kollimatoroptik. Von den Totalreflektionsflächen 28 werden diese Lichtanteile ebenfalls zur Lichtaustrittsfläche 29 der Kollimatoroptik 20 (vgl. Fig. 1a) reflektiert.

Sowohl das zentrale Lichtbündel 45 als auch das dieses umgebende Lichtbündel 46 wird, wie insbesondere Fig. 1a deutlich macht, parallelisiert und verlässt die Kollimatoroptik als paralleles Lichtstrahlenbündel 61.

Die erfindungsgemäße Besonderheit besteht nun unter anderem darin, dass die Lichtquelle 18 darüber hinaus einen radial äußeren Lichtanteil 23 emittiert, der in Fig. 1b dargestellt ist, und der die Kollimatoroptik 20 passiert. Der radial äußere Lichtanteil 23 trifft auf einen Reflektor 21, der innenseitig eine Reflektionsfläche 55 aufweist. Die Reflektionsfläche 55 ist hochreflektierend oder hochverspiegelt ausgebildet.

Der Reflektor 21 weist im wesentlichen eine Parabolform auf. Die Lichtquelle 18 ist im Brennpunkt 37 oder im Brennpunktbereich 37 des Reflektors 21 angeordnet.

Damit ein radial äußerer Lichtanteil 23 der von der Lichtquelle 18 emittierten Lichtanteile überhaupt die Kollimatoroptik 20 passieren kann, ist die Kollimatoroptik 20 entlang der optischen Achse 31 um einen Passierabstand 36 von der Lichtquelle 18 beabstandet. Dies zeigt Fig. 1b.

Der Abschnitt 35 der Kollimatoroptik 20, der der Lichtquelle 18 am nächsten ist, also der untere freie Randbereich 35 der Kollimatoroptik, in dem die Seitenwand 26 der Höhlung 25 mit der Totalreflektionsfläche 28 zusammentrifft, ist um diesen Passierabstand 36 von der Lichtquelle 18 und/oder von der Anordnungsebene 34 beabstandet.

Diese Beabstandung ermöglicht es, das von der Lichtquelle 18 emittierte Licht in einen radial inneren Lichtanteil 22 und einen radial äußeren Lichtanteil 23 (Fig. 1b) zu unterteilen.

Der radial innere Lichtanteil 22 wird vollständig von der Kollimatoroptik 20 eingefangen. Der radial innere Lichtanteil umfasst das zuvor anhand von Fig. 4 erläuterte zentrale Lichtbündel 45 und das dieses umgebende Lichtbündel 46.

Der radial äußere Lichtanteil 23 passiert die Kollimatoroptik 20 vollständig und trifft auf die Reflektionsfläche 55 des Reflektors 21 und wird von dort reflektiert. Das gesamte oder nahezu gesamte Licht, das als radial äußerer Lichtanteil von der Lichtquelle emittiert wird und die Kollimatoroptik 20 passiert, wird daher von dem Reflektor 21 eingefangen.

Damit kann das gesamte oder nahezu das gesamte von der Lichtquelle 18 emittierte Licht verwendet und zur Weiterverarbeitung genutzt werden. Damit wird einerseits ein paralleles Lichtstrahlenbündel 61 mit einer sehr engen Lichtverteilung generiert. Zum anderen ist die Leuchte auch sehr effizient und nutzt das gesamte oder nahezu das gesamte von der Lichtquelle 18 emittierte Licht.

Die Höhlung 25 weist, wie am besten aus Fig. 1b ersichtlich, eine Abmessung in einer Richtung quer zur optischen Achse 31 des Lichtantriebes auf, die mit 32 bezeichnet ist. Die Abmessung 32 ist in der Richtung quer zur optischen Achse 31 größer, als die Abmessung 33 der Lichtquelle 18 in einer Richtung quer zur optischen Achse 31.

Mit dieser Ausbildung wird gewährleistet, dass das gesamte oder nahezu das gesamte Licht 22, das von der Lichtquelle 18 stammt, - mit Ausnahme der radial äußeren Lichtanteile 23 - von der Kollimatoroptik 20 eingefangen wird.

Zum besseren Verständnis wird angemerkt, dass die Fig. 1b - wie gleichermaßen auch die übrigen Figuren - nur vereinfacht pauschalisiert das Lichtabstrahlverhalten der Lichtquelle 18, veranschaulicht durch einige Lichtstrahlen, zeigt.

So zeigt insbesondere die Fig. 1b nur das von der mittleren LED 19b emittierte Licht.

Dem Leser ist aber deutlich, dass auch von den beiden LEDs 19a, 19c entsprechende Lichtstrahlen emittiert werden.

Das Ausführungsbeispiel der Fig. 1c entspricht im wesentlichen dem Ausführungsbeispiel der Fig. 1b mit dem einzigen Unterschied, dass der Reflektor 21 noch etwas näher an die Anordnungsebene 34 herangerückt ist. Der Abschnitt 38 des Reflektors 21, der der Lichtquelle 18 am nächsten ist, ist bis an die Platine 65 herangerückt. Hierdurch können noch weiter radial außen emittierte Lichtanteile von dem Reflektor 21 mit eingefangen werden.

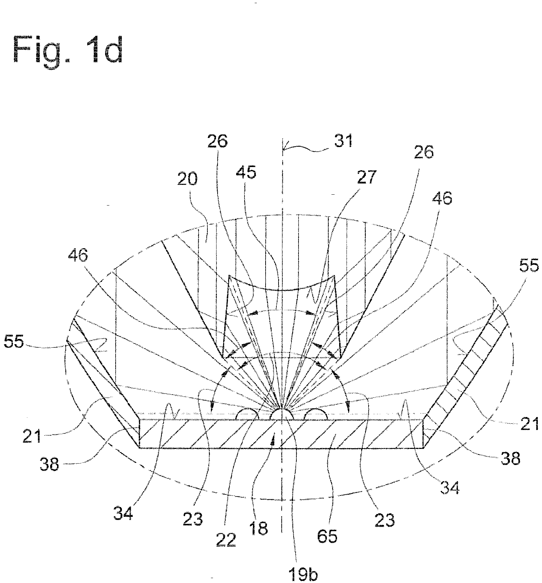

Anhand der Fig. 1d sollen die unterschiedlichen, von der Lichtquelle 18 emittierten Lichtanteile übersichtlich dargestellt und erläutert werden:
Von der Lichtquelle 18 werden radial innere Lichtanteile 22 und radial äußere Lichtanteile 23 emittiert.

Der Begriff radial innen und radial außen bezieht sich auf die optische Achse 31 als radiales Zentrum.

Die radial inneren Lichtanteile 22 umfassen ein zentrales Lichtbündel 45 und ein dieses umgebende Lichtbündel 46.

Die radial inneren Lichtanteile 22 werden entlang einem Abstrahlwinkel von etwa 90° emittiert. Die radial äußeren Lichtanteile 23 erstrecken sich - bei Betrachtung der Papierebene der Fig. 1d - unter Addition der beiden dort dargestellten Winkelanteile von jeweils 45°, links der optischen Achse 31 und rechts der optischen Achse 31, auf einen Winkel von insgesamt ebenfalls nahezu 90°. Angemerkt sei, dass die einzelnen Lichtquellen geringfügige Abschattungseffekte nach sich ziehen können.

Das zentrale Lichtbündel 45 erstreckt sich etwa über einen Winkel von 45°. Das das zentrale Lichtbündel 45 umgebende Lichtbündel 46 erstreckt sich in Summe ebenfalls über einen Gesamtwinkel von etwa 45°.

Die Größe der einzelnen Winkel kann im Rahmen der Erfindung variieren und hängt von der Dimensionierung und Erstreckung der Deckenfläche 27 der Höhlung 25 bzw. der Seitenwandabschnitte 26 der Höhlung 25 ab. Außerdem hängt die Größe der Winkel natürlich auch von der Beabstandung der Kollimatoroptik 20 von der Lichtquelle 18 ab.

Die Ausführungsbeispiele der Fig. 1a bis 1bd verzichten auf die Darstellung weiterer Komponenten der Leuchte 10.

Die Figuren 4 und 5 veranschaulichen, dass die erfindungsgemäße Leuchte 10 ein Gehäuse 39 aufweist.

Dieses ist bei zahlreichen Ausführungsbeispielen der Erfindung kreiszylindrisch ausgebildet.

Ausweislich der Figuren 4 und 5 kann die jeweilige Zerstreuungslinse 43, 44 an einer Gehäusekappe 68 festgelegt sein, die über eine mechanische Schnittstelle 76 an dem Leuchtengehäuse 39 lösbar festlegbar ist.

Das Leuchtengehäuse 39 und auch die Gehäusekappe 68 können eine Innenumfangsfläche aufweisen, die z. B. schwarz und matt gehalten ist, um ungewünschte Reflektionen und Blendeffekte zu vermeiden.

Angemerkt sei an dieser Stelle auch, dass die Zerstreuungslinsen 43 und 44 gemäß der Ausführungsbeispiele der Fig. 5 auf ihrer Außenmantelfläche auch eine Schwärzung aufweisen können, die in den Figuren 4 und 5 durch eine gepunktete Linie angedeutet ist. Die Schwärzung dient dazu, Streulicht und Blendeffekte durch ungewünschte Reflektion zu vermeiden. Hierzu wird auch verwiesen auf die deutsche Patentanmeldung DE 10 2019 119 682 A1 der Anmelderin, die zur Vermeidung von Wiederholungen in den Inhalt der vorliegenden Patentanmeldung vollumfänglich mit eingeschlossen wird, dies auch zu dem Zwecke, bei Bedarf einzelne oder mehrere der Merkmale dieser nachveröffentlichten Patentanmeldung in den Anmeidungstext oder die Ansprüche der vorliegenden Patentanmeldung mit aufnehmen zu können.

Die Ausführungsbeispiele der Fig. 1a, 4 und 5 der vorliegenden Patentanmeldung zeigen jeweils eine Streuscheibe 41, die optional im Strahlengang angeordnet werden kann, um für eine Vergleichmäßigung und/oder ein Weicherzeichnen des Lichtes zu sorgen. Hierdurch kann beispielsweise auch eine ungewünschte Schlierenbildung verhindert werden.

Bei den Ausführungsbeispielen in den Zeichnungen ist die Streuscheibe 41 übertrieben weit von der Lichtaustrittsfläche der Kollimatoroptik 20 beabstandet dargestellt. Tatsächlich können bei den überaus meisten Ausführungsbeispielen die Streuscheiben 41 näher an den Lichtantrieb 74 heran gerückt sein.

Von der Erfindung ist auch umfasst, wenn zusätzlich zu einer solchen Streuscheibe 41 oder alternativ zu einer Streuscheibe 41 eine Ausbildung der Lichtaustrittsfläche des Kollimators 20 getroffen ist, die zu einer gewissen Lichtstreuung oder Lichtmischung führt. Beispielsweise kann die Lichtaustrittsfläche des Kollimators 20 mit einer entsprechenden Aufrauhung oder mit einer Mikrostruktur versehen sein.

Alternativ kann auch nur die Lichtaustrittsfläche des Positionierflansches 54 mit einer entsprechend gestalteten Oberfläche, z. B. mit einer Rauheit, versehen sein.

Zusätzlich und/oder alternativ kann auch die Lichteintrittsfläche des Positionierflansches 54, also die der Anordnungsfläche 34 zugewandte Seite des Positionierflansches 54, mit einer Aufrauhung versehen sein.

Ausweislich Fig. 1a weist der Reflektor 21 eine hochverspiegelte Reflektionsfläche 50 auf. Diese kann beispielsweise als Metalldampfschicht auf ein Kunststoffspritzgussteil aufgebracht werden. Das Kunststoffspritzgussteil ermöglicht insbesondere eine besonders einfache Konstruktion und Fertigung des Reflektors 21.

Der Reflektor kann alternativ auch aus Aluminium oder aus einem anderen geeigneten Material gefertigt sein.

An dem Reflektor 21 kann, wie beispielsweise gemäß Fig. 1a deutlich gemacht wird, vorteilhafterweise ein Montageabschnitt 66 angebracht sein. Der Montageabschnitt 66 kann dazu ausgebildet sein, um den Reflektor 21 an dem Leuchtengehäuse 39 festzulegen.

An dem Reflektor 21 kann aber insbesondere auch eine Befestigungsvorrichtung 53 angeordnet sein. Diese kann beispielsweise, wie in Fig. 1 dargestellt, eine umlaufende Nut umfassen. Die Befestigungsvorrichtung 53 kann dazu dienen, die Kollimatoroptik 20 an dem Reflektor 21 festzulegen.

Hierzu kann die Kollimatoroptik 20 z. B. einen, zuvor bereits angedeuteten Positionierflansch 54 aufweisen.

Dieser ist insbesondere in Fig. 1a gezeigt. Der Positionierflansch 54 erstreckt sich von dem zentralen Abschnitt 75 der Kollimatoroptik 20 radial nach außen.

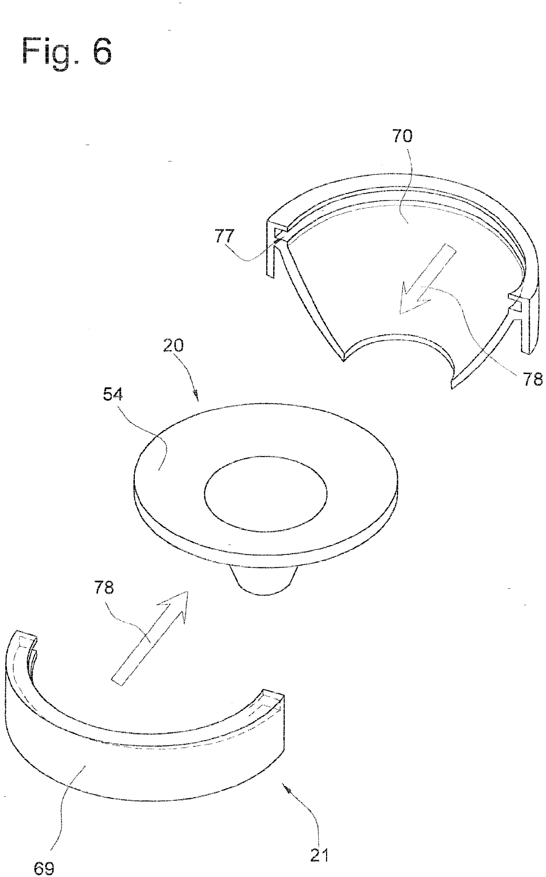

Der Positionierabschnitt kann, wie dies beispielsweise die Fig. 6 andeutet, in eine umlaufende Nut 77 des Reflektors 21 eingesetzt werden:
Gemäß Fig. 6 besteht der Reflektor 21 z. B. aus einer ersten Reflektorschale 69 und einer zweiten Reflektorschale 70. Diese sind in Radialrichtung 78 aneinander befestigbar und können dem Positionierflansch 54 der Kollimatoroptik beidseitig einfassen und zwischen sich halten.

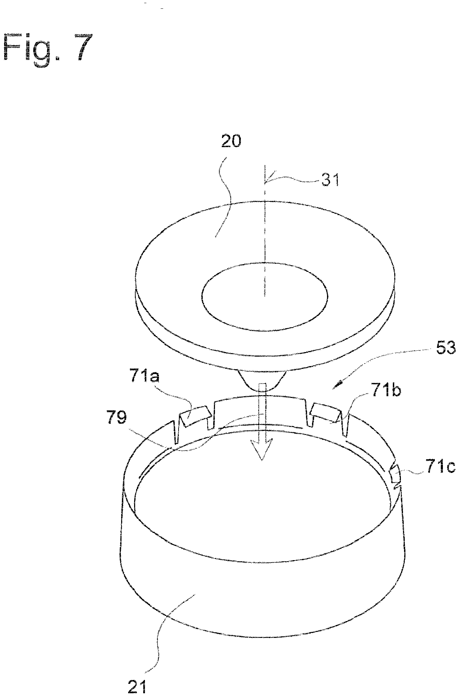

Alternativ kann, wie dies beispielsweise Fig. 7 deutlich macht, auch eine Befestigung der Kollimatoroptik 20 und dem Reflektor 21 auch in Axialrichtung 79, also entlang der optischen Achse 31, erfolgen. Hierzu kann an dem Reflektor 21 eine Mehrzahl von Federlaschen 71a, 71b, 71c angebracht sein, die nach Art von Schnapphaken die Kollimatoroptik 20 axial festlegen.

Mittels der Befestigungsvorrichtung 53, ungeachtet deren Ausgestaltung, kann eine relative Befestigung von Kollimatoroptik 20 und Reflektor 21 aneinander erreicht werden.

Hierdurch wird eine Handhabungseinheit geschaffen, die eine exakte relative Positionierung von Kollimatoroptik 20 und Reflektor 21 zueinander gewährleistet. Dadurch kann vorteilhaft auch eine exakte Positionierung dieser Handhabungseinheit relativ zu der Lichtquelle 18 gewährleistet werden.

Ausweislich des Ausführungsbeispiels der Fig. 4 wird deutlich, dass der Reflektor 21 eine axiale Bauhöhe 47 aufweist, die die axiale Bauhöhe 48 der Totalreflektionsflächen 28 der Kollimatoroptik 20 übersteigt. Dies bietet die Möglichkeit, die Kollimatoroptik 20 mit nur einer sehr geringen axialen Bauhöhe 49 auszubilden.

Entscheidend für die Fertigung der Kollimatoroptik 20 ist aber ohnehin nur die Bauhöhe des zentralen Abschnittes 75, die im wesentlichen der Bauhöhe 48 der Totalreflektionsflächen 28 entspricht.

Durch die entsprechend vorgesehene Kombination einer Kollimatoroptik 20 mit einem Reflektor 21 kann also die Bauhöhe 49 der Kollimatoroptik 20 bzw. die Bauhöhe 48 des zentralen Abschnittes 75 der Kollimatoroptik auch bei großen Durchmessern 50 gering gehalten werden, wodurch die Fertigung der Kollimatoroptik 20 erleichtert ist.

Gemäß der Fig. 4 wird auch deutlich, dass der Außendurchmesser 50 der Kollimatoroptik derart bemessen ist, dass er im wesentlichen dem Innenumfang 80 des Leuchtengehäuses 39 entspricht bzw. nahezu entspricht. Damit kann das gesamte, von der Lichtquelle 18 emittierte Licht, weiterverarbeitet werden.

Bei den Ausführungsbeispielen der Fig. 1a bis 1c sowie 4 und 5 ist die Befestigungsvorrichtung 53, die eine Befestigung der Kollimatoroptik 20 an dem Reflektor 21 erlaubt, im Bereich des freien Endabschnittes 56 des Reflektors 21 angeordnet. Von der Erfindung ist aber auch umfasst, wenn die Kollimatoroptik 20 an einer anderen Stelle am Reflektor 21 befestigt wird, z. B. näher an dem der Lichtquelle 18 zugewandten Abschnitt 38 des Reflektors 21.

Von der Erfindung ist darüber hinaus auch umfasst, wenn die Kollimatoroptik 20 - insbesondere unabhängig von dem Reflektor 21 - unmittelbar relativ zu dem Leuchtengehäuse 39 festgelegt ist, oder beispielsweise auch fest relativ zu der Anordnungsfläche 34 unmittelbar festgelegt ist.

So ist beispielsweise von der Erfindung auch umfasst, wenn der zentrale Abschnitt 75 der Kollimatoroptik 20 fest relativ zu der Platine 65 festgelegt ist, und der Reflektor 21 auf die dargestellte Weise fest relativ zum Leuchtengehäuse 39 festgelegt ist. Bei diesem Ausführungsbeispiel sind Kollimatoroptik 20 und Reflektor 21 nicht unmittelbar miteinander verbunden. Bei diesem Ausführungsbeispiel kann der Positionierflansch 54 der Kollimatoroptik 20 vollständig entfallen.

Gemäß den Ausführungsbeispielen der Erfindung, die in den Zeichnungen dargestellt sind, verlässt den Lichtantrieb 74 ein im wesentlichen paralleles Lichtstrahlenbündel 61. Von der Erfindung ist es aber auch umfasst, wenn das von dem Lichtantrieb 74 generierte Lichtstrahlenbündel im wesentlichen parallel ausgebildet ist, oder nicht parallel ausgebildet ist.

Die erfindungsgemäße Leuchte 10 dient zur Generierung einer rotationssymmetrischen Lichtverteilung 16, 17 oder einer rotationsasymmetrischen Lichtverteilung 17b.

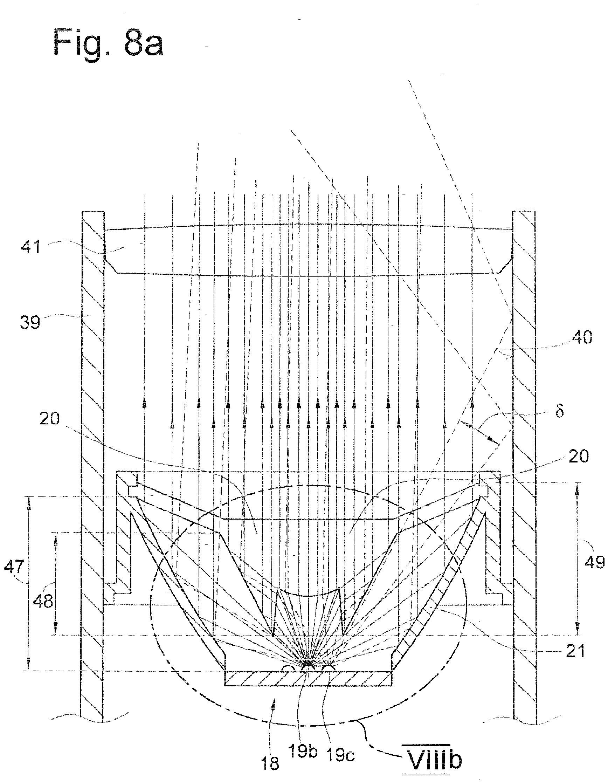

Das Ausführungsbeispiel der Fig. 8a entspricht der Darstellung der Fig. 1a, wobei aber zusätzlich ein Leuchtengehäuse 39 dargestellt ist. Hier soll ein Lichtstrahlenbündel *δ* veranschaulicht werden, welches an sich unerwünscht ist: Der Lichtanteil δ umfasst all diejenigen, von der LED 19c der Lichtquelle 18 gemäß Fig. 8a emittierten Lichtanteile, die auf die Innenwandung 40 des Leuchtengehäuses 39 treffen, ohne zuvor von dem Reflektor 21 reflektiert worden zu sein, und ohne zuvor durch die Kollimatoroptik 20 hindurch getreten zu sein und dort gebrochen oder totalreflektiert worden zu sein.

Diese Lichtanteile δ sind ungewünscht und können infolge ihrer Reflektion aus Innenumfangsfläche 40 insbesondere Blendeffekte generieren.

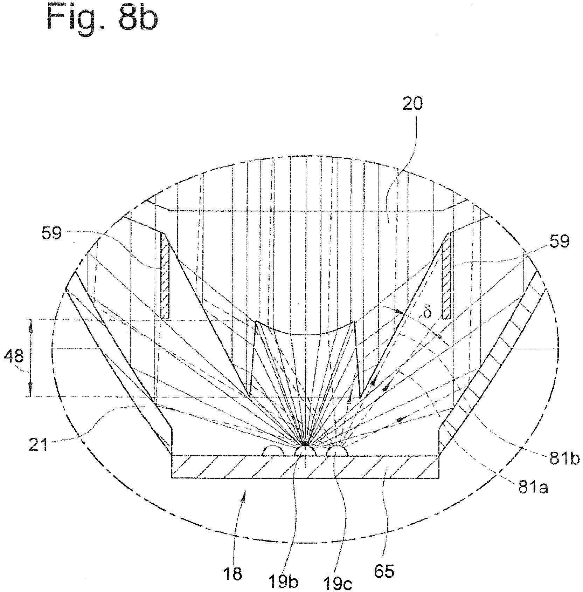

Um diese Lichtanteile δ zu eliminieren, schlägt eine Ausführungsform der Erfindung einen kragenartigen Abschnitt 59 vor, der in Fig. 8b dargestellt ist. Bei diesem Ausführungsbeispiel ist der kragenartige Abschnitt der Übersichtlichkeit halber schraffiert dargestellt. Er ist aber insbesondere einstückig und stoffschlüssig mit der Kollimatoroptik 20 verbunden und z. B. an diese mit angespritzt. Die Schraffur soll lediglich verdeutlichen, dass die Lichtstrahlen, angedeutet durch die Bezugszeichen 81a, 81b als Randstrahlen des Lichtanteils δ, jedenfalls nicht ungebrochen oder ungehindert durch den kragenartigen Abschnitt hindurch treten können.

Dem gleichen Ziel, nämlich einer Elemination dieser ungewünschten Lichtanteile δ, dient das Ausführungsbeispiel der Fig. 9: Hier ist der kragenartige Abschnitt 59 durch einen Fresnellinsenabschnitt 60 bereitgestellt, der auch diese Lichtanteile δ einfängt, und infolge einer Totalreflektion für eine Weiterverarbeitung zur Verfügung stellt. Hierdurch wird die Lichteffizienz der Leuchte weiter erhöht.

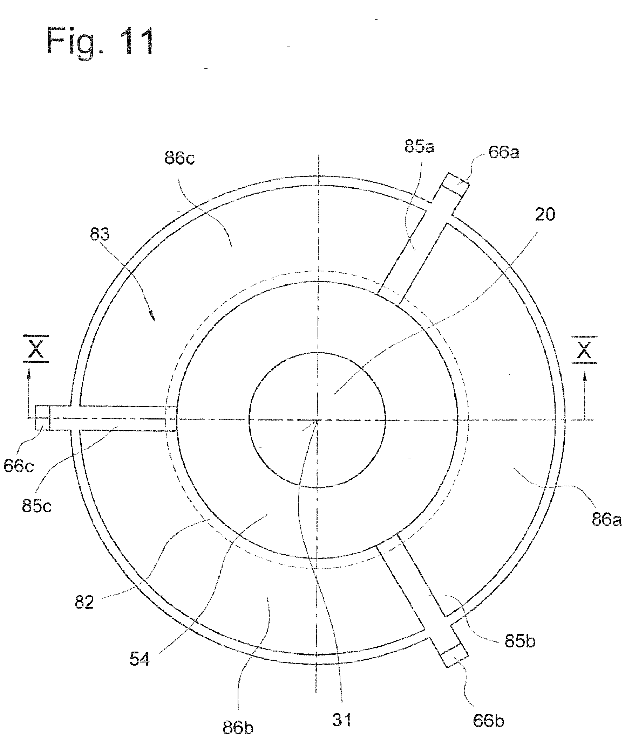

Anhand der Ausführungsbeispiele der Figuren 10 und 11 soll nun noch eine weitere erfindungsgemäße Leuchte erläutert werden:
Fig. 10 zeigt einen Lichtantrieb 74 in einer Darstellung ähnlich der Fig. 1a.

Wiederum umfasst der Lichtantrieb 74 eine Lichtquelle 18 mit beispielhaft dargestellt drei LEDs 19a, 19b, 19c, und einen Kollimator 20, der vorliegend identisch ausgebildet ist zu dem Kollimator 20 des Ausführungsbeispiels der Fig. 1a.

Die Besonderheit des Ausführungsbeispiels der Fig. 10 besteht darin, dass ein erster Reflektor 82 und ein zweiter Reflektor 83 vorgesehen ist.

Die beiden Reflektoren 82, 83 sind ineinander verschachtelt angeordnet. Dies umfasst insbesondere, dass beide Reflektoren 82, 83 bezogen auf ihre jeweilige optische Achse 31 konzentrisch angeordnet sind.

Der erste Reflektor 82 ist unter einem Reflektorpassierabstand 84 beabstandet von der Anordnungsfläche 34 der Lichtquelle und/oder beabstandet von der Lichtquelle 18 angeordnet.

Der erste Reflektor 82 ist dazu ausgebildet, ein von der Lichtquelle 18 unter dem Winkel *β*1 emittiertes Lichtstrahlenbündel, also einen Lichtanteil *β*1, einzufangen, zu sammeln und zu kollimieren. Insbesondere wird dieses Licht nach Reflektion am Reflektor 82 als paralleles Lichtstrahlenbündel emittiert.

Der zweite Reflektor 83 ist dazu ausgebildet, ein von der Lichtquelle 18 unter dem Raumwinkel *β*2 emittiertes Lichtstrahlenbündel einzufangen, zu kollimieren und als paralleles oder im wesentlichen paralleles Lichtstrahlenbündel zu emittieren.

Diese Ausführungsform ist insbesondere besonders vorteilhaft, wenn besonders große Leuchten, also beispielsweise Leuchten mit einem Außendurchmesser von z. B. mehr als 100 mm oder mehr als 150 mm, gefertigt werden sollen.

Auch bei diesen groß dimensionierten Leuchten kann ein Rückgriff auf einen kleinbauenden Kollimator 20 erfolgen.

Die Kollimatoroptik 20 fängt das radial innen emittierte Lichtstrahlenbündel 22 ein und kollimiert dieses.

Die Kollimatoroptik 20 wird zugleich von einem radial äußeren emittierten Lichtstrahlenbündel 23 passiert. Die radial außen emittierten Lichtstrahlenanteile 23 teilen sich in die Lichtanteile *β*1 und *β*2 auf, die auf die beiden Reflektoren 82, 83 gelangen.

Die Befestigung der Kollimatoroptik 20 kann an dem ersten Reflektor 82 erfolgen, insbesondere derart, wie die Befestigung des Kollimators 20 an dem Reflektor 21 bei den Ausführungsbeispielen der Figuren 1 bis 9 erfolgt.

Bei dem Ausführungsbeispiel der Fig. 10 und 11 kann darüber hinaus vorgesehen sein, dass der zweite Reflektor 83 gemeinsam mit dem ersten Reflektor 82 eine Baueinheit bildet. Hierzu können beispielsweise drei Verbindungsstege 85a, 85b, 85c vorgesehen sein, die die beiden Reflektoren 82, 83 miteinander verbinden. Der Austritt des unter dem Raumwinkel *β*2 emittierten Lichtstrahlenanteils aus dem zweiten Reflektor 83 ist aufgrund der großen Freiflächen 86a, 86b, 86c und der nur sehr schmalen Stege 85a, 85b, 85c nahezu unbeeinträchtigt möglich.

Von der Erfindung ist auch umfasst, wenn alternativ der erste Reflektor 82 an der Kollimatoroptik 20 befestigt ist, und die Kollimatoroptik 20 unmittelbar an dem zweiten Reflektor 83 befestigt ist.

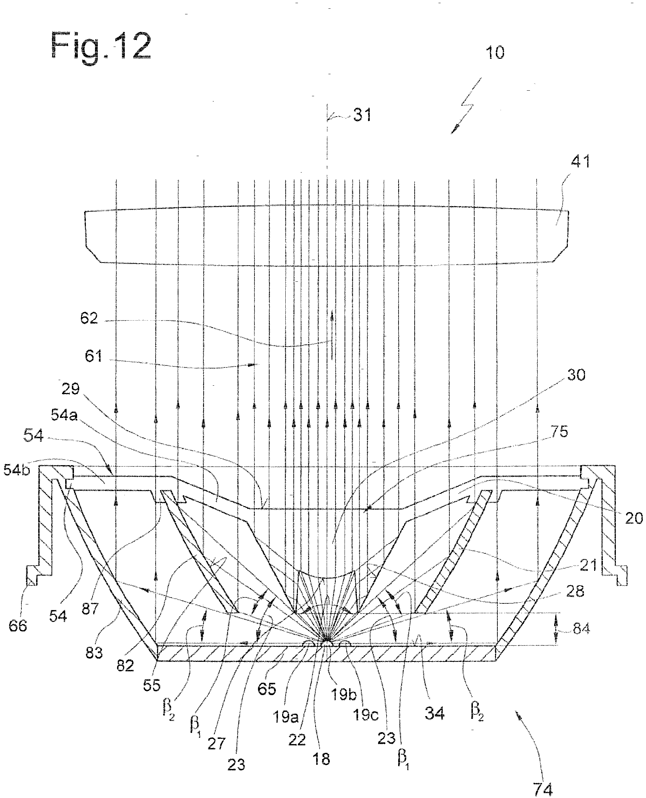

Ein solches Ausführungsbeispiel zeigt Fig. 12: Hier ist der erste Reflektor 82 mit seinem oberen Randbereich in eine entsprechende Halteaufnahme 87 an dem Positionierflansch 54 der Kollimatoroptik 20 eingesetzt und wird dort gehalten. Bei dem Ausführungsbeispiel der Fig. 12 ist der Positionierflansch 54 in einen ersten Abschnitt 54a und einen zweiten Abschnitt 54b unterteilt.

Des weiteren sind von der Erfindung Ausführungsbeispiele umfasst, bei denen die Kollimatoroptik und/oder der erste Reflektor 82 und/oder der zweite Reflektor 83 mittelbar oder unmittelbar fest relativ zu einem in den Figuren 10, 11 und 12 nicht dargestellten Gehäuse der Leuchte festgelegt sind.

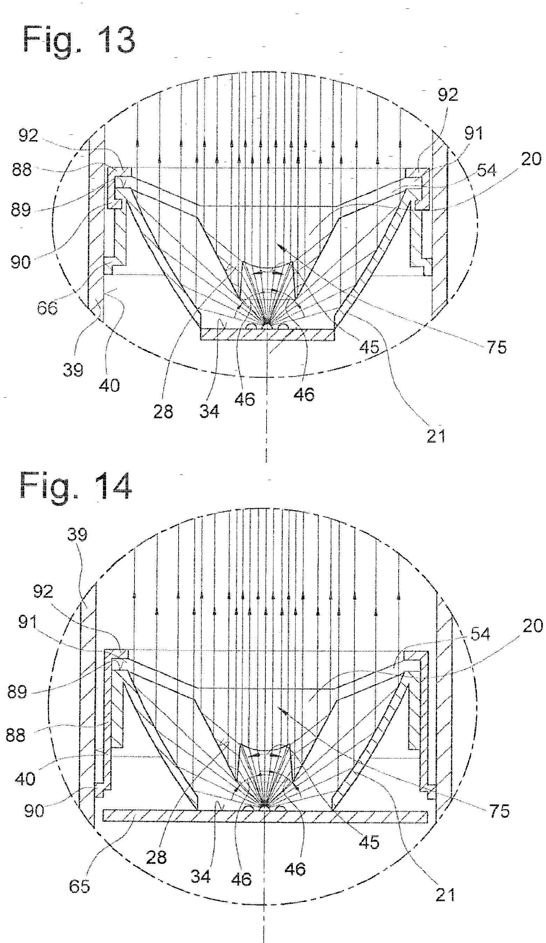

Anhand des Ausführungsbeispiels der Fig. 13 soll nun noch eine alternative Festlegung von Kollimatoroptik 20 und Reflektor 21 relativ zu einander erläutert werden:
Gemäß Fig. 13 ist schematisch ein Klemmring 88 angedeutet, der mit einem Übergreifabschnitt 92 einen randseitigen, sogenannten Auflageabschnitt 91 der Kollimatoroptik 20 übergreift. Der Auflageabschnitt 91 der Kollimatoroptik 20 liegt auf einer Auflagefläche 89 an dem Reflektor 21 auf.

Der Klemmring 88 umfasst eine Klemmringhalterung 90, mit der der Klemmring 88 an dem Reflektor 21 festgelegt ist.

Der Klemmring 88 dient also dazu, die Kollimatoroptik 20 relativ zu dem Reflektor 21 festzulegen.

Die Festlegung kann beispielsweise unter Zuhilfenahme von Federriegel oder Federlaschenelementen erfolgen, oder unter Zuhilfenahme einer Ringschnappverbindung. Freilich können alternativ oder zusätzlich auch noch Hilfselemente, wie Schrauben, Klammern, Splinte, oder dergleichen Anwendung finden.

Die den Reflektor 21, die Kollimatoroptik 20 und den Klemmring 88 umfassende Baueinheit wird unter Zuhilfenahme des Montageabschnittes 66 analog zu den zuvor beschriebenen Ausführungsbeispielen an der Innenwandung 40 des Gehäuses 39 festgelegt.

Eine weitere alternative Ausgestaltung zeigt Fig. 14:
Hier ist der Klemmring 88 mit einer Klemmringhalterung 90 versehen, die unmittelbar zur Festlegung der Baueinheit, umfassend die Kollimatoroptik 20, den Klemmring 88 und den Reflektor 21, an der Innenwandung 40 des Leuchtengehäuses 39 dient.

Auch hier können in Fig. 14 nicht dargestellte Haltelaschen, Federklemmelemente oder dergleichen Halteelemente vorgesehen sein.

Alternativ zu der Darstellung der Fig. 14 kann bei einem weiteren Ausführungsbeispiel auch vorgesehen sein, dass der Klemmring 88 unmittelbar an der Platine 65 festgelegt ist, und eine Baueinheit, die den Klemmring 88, die Kollimatoroptik 20, den Reflektor 21 und die Platine 65 umfasst, über in Fig. 14 nicht dargestellte Montagemittel an dem Leuchtengehäuse 39 festgelegt ist.

## Patentansprüche

1. Leuchte (10, 12, 13) zur Ausleuchtung von Gebäudeflächen (14) oder Gebäudeteilflächen, umfassend eine Lichtquelle (18) mit wenigstens einer LED (19a, 19b, 19c), eine Kollimatoroptik (20), und einen Reflektor (21), wobei ein von der Lichtquelle emittierter radial innerer Lichtanteil (22) auf die Kollimatoroptik trifft, und von dieser gebündelt wird, und wobei ein von der Lichtquelle emittierter radial äußerer Lichtanteil (23) die Kollimatoroptik passiert und auf den Reflektor (21) trifft, und von diesem gebündelt wird.

2. Leuchte nach Anspruch 1, **dadurch gekennzeichnet, dass** die Kollimatoroptik (20) eine von einer Höhlung (25) bereitgestellte Lichteintrittsfläche (24) aufweist.

3. Leuchte nach Anspruch 2, **dadurch gekennzeichnet, dass** die Höhlung (25) in einer Richtung quer zu einer optischen Achse (31) der Kollimatoroptik eine Abmessung (32) aufweist, die eine Abmessung (33) der Lichtquelle (18) übersteigt.

4. Leuchte nach einem der Ansprüche 1 bis 3, **dadurch gekennzeichnet, dass** die Kollimatoroptik (20) mit ihrem der Lichtquelle (18) nächsten Abschnitt (35) von der Lichtquelle (18) entlang einer optischen Achse (31) der Kollimatoroptik (20) um einen Passierabstand (36) beabstandet angeordnet ist.

5. Leuchte nach einem der vorangegangenen Ansprüche, **dadurch gekennzeichnet, dass** die Lichtquelle (18) in einem Brennpunkt (37) des parabolförmig oder im wesentlichen parabolförmig ausgebildeten Reflektors (21) angeordnet ist.

6. Leuchte nach einem der vorangegangenen Ansprüche, **dadurch gekennzeichnet, dass** sich der Reflektor (21) mit seinem der Lichtquelle (18) zugewandten Abschnitt (38) bis an eine Anordnungsebene (34) der Lichtquelle (18) heran oder bis nahe daran erstreckt.

7. Leuchte nach einem der vorangegangenen Ansprüche, **dadurch gekennzeichnet, dass** sich der Reflektor (21) bis nahe an eine innere Wandung (40) eines Gehäuses (39) der Leuchte (10) heran erstreckt.

8. Leuchte nach einem der vorangegangenen Ansprüche, **dadurch gekennzeichnet, dass** der radial innere Lichtanteil (22) in ein zentrales Lichtbündel (45) und ein dieses umgebendes Lichtbündel (46) unterteilbar ist, wobei das zentrale Lichtbündel (45) auf einen Linsenabschnitt (30) der Kollimoroptik (20) fällt, und wobei das umgebende Lichtbündel (46) unter Zuhilfenahme von Totalreflektionsflächen (28) gebündelt wird.

9. Leuchte nach einem der vorangegangenen Ansprüche, **dadurch gekennzeichnet, dass** der Reflektor (21) eine axiale Bauhöhe (47) in Richtung seiner optischen Achse (31) aufweist, die eine axiale Bauhöhe (48) von Totalreflektionsflächen (28) der Kollimatoroptik (20) übersteigt.

10. Leuchte nach einem der vorangegangenen Ansprüche, **dadurch gekennzeichnet, dass** die Kollimatoroptik (20) einen maximalen Außendurchmesser (50) aufweist, der größer ist als 30mm, insbesondere größer als 35 mm, weiter insbesondere größer als 40mm, weiter insbesondere größer als 45mm, weiter insbesondere größer als 50mm, weiter insbesondere größer als 55mm, weiter insbesondere größer als 60mm, weiter insbesondere größer als 70mm, weiter insbesondere größer als 80mm, weiter insbesondere größer als 90mm, weiter insbesondere größer als 100mm.

11. Leuchte nach einem der vorangegangenen Ansprüche, **dadurch gekennzeichnet, dass** die Leuchte (10) eine rotationssymmetrische Lichtverteilung (51) bereitstellt.

12. Leuchte nach einem der vorangegangenen Ansprüche, **dadurch gekennzeichnet, dass** die Kollimatoroptik (20) an dem Reflektor (21) befestigt ist.

13. Leuchte nach einem der vorangegangenen Ansprüche, **dadurch gekennzeichnet, dass** die Kollimatoroptik (20) einen Positionierflansch (54) aufweist.

14. Leuchte nach Anspruch 13, **dadurch gekennzeichnet, dass** sich die Kollimatoroptik (20) mit ihrem Positionierflansch (54) bis nahe an eine innere Wandung (55) des Reflektors (21) im Bereich seines freien, von der Lichtquelle (18) maximal beabstandeten Endabschnittes (56) heran erstreckt.

15. System (11) zur Bereitstellung von Gebäudeleuchten (10, 12, 13), mit einer ersten Leuchte (12) und mit einer zweiten Leuchte (13), wobei jede der beiden Leuchten eine Lichtquelle (18) mit wenigstens einer LED (19a, 19b, 19c), eine Kollimatoroptik (20), und einen Reflektor (21) umfasst, wobei jeweils ein von der Lichtquelle emittierter radial innerer Lichtanteil (22) auf die Kollimatoroptik (20) trifft, und von dieser gebündelt wird, und wobei jeweils ein von der Lichtquelle emittierter radial äußerer Lichtanteil (23) die Kollimatoroptik (20) passiert und auf den Reflektor (21) trifft, und von diesem gebündelt wird, und wobei im Lichtpfad (62) auf der der Lichtquelle (18) abgewandten Seite der Kollimatoroptik (20) ein Linsenelement (42) angeordnet ist, wobei die erste Leuchte (12) zur Bereitstellung einer ersten Lichtverteilung (16) ein erstes Linsenelement (43) aufweist, und wobei die zweite Leuchte (13) zur Bereitstellung einer zweiten, von der ersten Lichtverteilung unterschiedlichen Lichtverteilung (17, 17b) ein zweites Linsenelement (44) aufweist.
